**Europäisches Patentamt**

**European Patent Office**

**Office européen des brevets**

(19)

(11) Veröffentlichungsnummer : **0 400 069 B1**

(12)

# EUROPÄISCHE PATENTSCHRIFT

(45) Veröffentlichungstag der Patentschrift :
23.12.92 Patentblatt 92/52

(51) Int. Cl.⁵ : **B60J 7/043**

(21) Anmeldenummer : **89903149.6**

(22) Anmeldetag : **03.03.89**

(86) Internationale Anmeldenummer :
**PCT/EP89/00220**

(87) Internationale Veröffentlichungsnummer :
**WO 89/08565 21.09.89 Gazette 89/23**

(54) **SONNENDACH.**

(30) Priorität : **08.03.88 DE 8803071 U**
**08.03.88 DE 8803070 U**

(43) Veröffentlichungstag der Anmeldung :
**05.12.90 Patentblatt 90/49**

(45) Bekanntmachung des Hinweises auf die
Patenterteilung :
**23.12.92 Patentblatt 92/52**

(84) Benannte Vertragsstaaten :
**DE FR GB IT**

(56) Entgegenhaltungen :
**EP-A- 0 263 430**
**GB-A- 2 129 477**

(73) Patentinhaber : **Farmont Produktion GmbH &**
**Co. KG**
**Schiess-Strasse 55**
**W-4000 Düsseldorf 11 (DE)**

(72) Erfinder : **FARMONT, Rolf**
**Hortensienstra e 17**
**W-4000 Düsseldorf 30 (DE)**
Erfinder : **VONGBUATHONG, Jirakorn**
**Nelkenstra e 6**
**W-4005 Meerbusch 3 (DE)**

(74) Vertreter : **Schumacher, Horst, Dr. Dipl.-Phys.**
**et al**
**Frühlingstrasse 43 (Ecke Holunderweg)**
**W-4300 Essen 1 (DE)**

EP 0 400 069 B1

**Beschreibung**

Die Erfindung betrifft ein Sonnendach für Fahrzeuge mit einem einen Deckelrahmen bildenden ersten und zweiten Rahmen und einem öffen- und schließbaren Deckel, bei dem der Deckelrahmen durch Einklemmen der Dachhaut im Bereich des Offnungsrandes zwischen dem ersten und zweiten Rahmen am Fahrzeugaufbau festlegbar ist und beim dem ein auf dem Umfang des Deckelrahmens verteilt angeordnete Klemmvorrichtungen die Aufrechterhaltung der erforderlichen Klemmkräfte zwischen dem ersten und dem zweiten Rahmen ermöglichen.

Derartige Sonnendächer sind aus der DE-C-32 41 652 bekannt, gemäß der bereits eine Klemm- oder Schnappverbindung für den ersten und zweiten Rahmen als eine der Verbindungsmöglichkeiten vorgeschlagen wurde. Eine derartig rastende Klemmverbindung ist auch aus der DE-A-35 45 973 bekannt. Bei dieser greift entweder ein mit Rastnasen versehener Steg des einen Rahmens in einen korrespondierende Rastelemente aufweisenden Schlitz des Gegenrahmens rastend ein, um so die Klemmverbindung herzustellen, oder es wird ein besonderes, den Deckelrahmen umlaufendes Klemmprofil verwendet, das sich zwischen dem einen Rahmen und seinem Gegenrahmen einspreizt und so beide Teilrahmen des Deckelrahmens in deren die Dachhaut einklemmenden Endlage hält; oder aber man verrastet einen im Querschnitt C-förmigen ersten Teilrahmen mit einem zweiten Teilrahmen, der seinerseits mit einem dritten Teilrahmen verklebt, verschweißt, verschraubt oder verrastet wird. Bei diesem bekannten Sonnendach ist ein Verschrauben des ersten und zweiten Rahmens aufgrund der Klemmverbindung entbehrlich, doch ist es gleichwohl schwierig, bei der Montage die für das dauerhaft feste und dichte Festlegen des Deckelrahmens an der Dachhaut erforderlichen Klemmkräfte bei der Rahmenmontage aufzubringen, weil der erste und der zweite Rahmen mit den Fingern einer Hand in Einbaulage so stark gegeneinander gepreßt werden müssen, wie es die an der Dachhaut notwendige relativ hohe Klemmkraft erfordert, während mit der zweiten Hand das Klemmprofil in eine relativ schmale Rille bis zum Verrasten eingedrückt werden muß. In der Praxis hat sich gezeigt, daß die Verwendung eines Spezialwerkzeuges unumgänglich ist, um die erforderlichen Kräfte aufbringen zu können; dies ist unpraktisch.

Das umlaufende Klemmprofil kann zwar entfallen, wenn der erste und der zweite Rahmen unmittelbar miteinander verrastbar sind, so daß die Finger beider Hände des Monteurs für das Aufbringen der erforderlichen Klemmkraft verfügbar sind, doch wird dadurch die punktuell aufbringbare Klemmkraft nur geringfügig größer und es ist in Kauf zu nehmen, daß die Rastverbindung bei einer etwa notwendigen Demontage des Deckelrahmens zerstört wird und der Deckelrahmen nicht wiederverwendbar ist.

Davon ausgehend liegt der Erfindung die **Aufgabe** zugrunde, einen gattungsgemäßen Deckelrahmen zu schaffen, der die vorerwähnten Nachteile nicht aufweist, bei dem insbesondere die erforderlichen Klemmkräfte bei der Montage besonders einfach und sicher von einem einzigen Monteur aufbringbar sind und ohne daß ein besonderes Klemmprofil oder spezielles Werkzeug erforderlich ist.

Erfindungsgemäß wird diese Aufgabe durch die Merkmale der Ansprüche 1,2,3 oder 4 **gelöst**. wobei aus der älteren, aber nahveröffentlichten EP-A-0263 430, die laut Art.54(3) und (4) E.P.Ü zu berücksichtigen ist, bei einem Sonnendach der eingangs genannten Art bekannt ist, daß

- jede Klemmvorrichtung aus zumindest einem dreh- oder verschieb- oder schwenkbaren Riegel und aus zumindest einem von dem Riegel hintergreifbaren Sperrglied besteht,
- die Riegel an dem ersten oder zweiten Rahmen verstellbar, insbesondere dreh- oder verschieb- oder schwenkbar abgestützt bzw. gelagert oder lagerbar und die Sperrglieder an dem jeweils anderen Rahmen angeordnet und befestigt oder befestigbar - ganz allgemein also anbringbar - sind und
- die Riegel beim Drehen oder Verschieben oder Verschwenken in die Verriegelungsposition an den ihnen zugehörigen Sperrgliedern derart zur Anlage kommen, daß sie, insbesondere im Zusammenwirken mit den Sperrgliedern, die erforderlichen Klemmkräfte zwischen dem ersten und dem zweiten Rahmen ausüben, insbesondere aufbauen und danach aufrechterhalten.

Die Erfindung basiert demnach auf dem Grundgedanken, dreh- oder verschieb- oder schwenkbare Riegel oder Hebel zu verwenden, mittels derer die erforderlichen Klemmkräfte bei ihrem Drehen oder Verschieben oder Verschwenken aufgebracht werden.

Jeder dieser Riegel kann etwa die gleiche Klemmkraft aufbringen wie die bisher üblichen Schrauben; im Gegensatz zu Schrauben müssen die erfindungsgemäßen Riegel in der Regel aber nur um 90° verschwenkt oder verdreht oder einige Millimeter verschoben werden. Die hierzu erforderliche Kraft kann ergonomisch günstig vom Monteur aufgebracht werden, da das bei den bisher bekannten Klemmverbindungen erforderliche Zusammenpressen der beiden Teilrahmen zwischen dem Daumen und den übrigen Fingern einer Hand entfällt.

Insbesondere ermöglicht ein Griffstück, das gemäß einer Weiterbildung der Erfindung an dem Riegel fest angeordnet ist oder an dem Riegel angreifen kann,bzw. ein einfaches Angreifen der Verschiebekraft bzw. eine relativ große Kraftverstärkung, so daß die von dem Riegel aufzubringenden vergleichsweise großen Klemmkräfte einen wesentlich geringeren Kraftaufwand am - entsprechend lang ausgebildeten - Griffstück erfordern.

Weitere Vorteile der Erfindung bestehen u. a. darin, daß ein relativ großer Spannweg, relativ große Verriegelungsflächen zwischen Riegel und Sperrgliedern sowie relativ große Lagerflächen zwischen den Riegeln und dem ersten bzw. zweiten Rahmen, an dem der Riegel dreh- oder verschieb- oder schwenkbar gelagert ist, realisierbar sind. Auf diese Weise kann jede Klemmvorrichtung auch dann eine relativ große Kraft aufbringen, wenn er aus Gründen der zur Verfügung stehenden Baumaße des Deckelrahmens relativ klein gehalten werden muß, und/oder der gesamte Klemmechanismus sowie ggf. auch die Teilrahmen des Deckelrahmens aus Kunststoffmaterial hergestellt sind. Ein weiterer Vorteil besteht darin, daß die Riegel auch einzeln austauschbar sind, und zwar selbst dann, wenn der Deckelrahmen montiert ist und sich alle anderen Riegel in ihrer Verriegelungsposition befinden. Für verschiebbare Riegel mit keilförmigen Verriegelungsdruckflächen gilt: Je flacher die Steigung der paarweise orientierten Verriegelungsflächen ist, umso größer ist die erzielbare Klemmkraft und die Selbsthemmung gegen ein ungewolltes Öffnen der Klemmvorrichtung; typische Steigungswinkel liegen zwischen 1° und 45°.

"Sonnendächer" sind, im Sinne der Erfindung, alle Schiebe- und/oder Hebedächer mit lichtdurchlässigem oder lichtundurchlässigem schieb- und /oder hebbarem Deckel, sowohl für den werksseitigen, insbesondere aber auch für den nachträglichen Einbau.

Die den Deckelrahmen gemeinsam bildenden "ersten und zweiten" "Rahmen" können, wie bevorzugt, jeweils umlaufend geschlossen oder aber mehrteilig, insbesondere aus einzelnen Rahmenstreben zusammengesetzt sein; ebenso fallen die in der DE-A-35 45 973 erwähnten Trimmringe unter die erfindungsgemäß verwendbaren ersten und zweiten Rahmen. Das Rahmenmaterial kann u. a. aus Metall, insbesondere Leichtmetall, oder aber - wie bevorzugt - aus Kunststoff, insbesondere faserverstärktem Kunststoff, bestehen. Vorzugsweise ist mindestens einer der beiden Rahmen ein einstückiges, umlaufend geschlossenes Kunststofformteil. Einer der beiden (ersten oder zweiten) Rahmen kann mit dem Fahrzeugaufbau bereits werksseitig fest verbunden sein, er kann insbesondere einstückig von der Dachhaut gebildet sein - etwa wie in der DE-A-35 45 973 im Zusammenhang mit deren Fig. 11 erläutert. Dann reduziert sich das Einklemmen der Dachhaut zu einem Verspannen der Dachhaut mit dem mit ihr zunächst noch nicht fest verbundenen (zweiten oder ersten) Rahmen. Die Funktionen des ersten und zweiten Rahmens können selbstverständlich vertauscht werden. Es ist auch unerheblich, welcher der beiden Rahmen unterhalb bzw. oberhalb der Dachhaut angeordnet ist.

Der erste und zweite Rahmen weisen, vorzugsweise, zumindest in unmittelbarer Nähe der Riegel, korrespondierende Kontaktflächen etwa senkrecht zur Spannrichtung auf, durch die die Klemmkräfte besonders wirkungsvoll auf die Dachhaut übertragen werden.

Die "Riegel" sind erfindungsgemäß so geformt und dreh- oder verschieb- oder schwenkbar am ersten oder zweiten Rahmen gelagert (abgestützt), daß sie in ihrer Verriegelungsposition das zugehörige Sperrglied hintergreifen. Zu diesem Zweck können die Riegel im Bereich ihrer Kontaktfläche für den Kontakt mit dem Sperrglied in Bewegungsrichtung konkav gekrümmt sein. Generell ist aber jede Art von dreh- oder verschieb- oder schwenkbaren Riegeln geeignet.

Die wirksame "Hebellänge" der Riegel sollte zumindest in der Verriegelungsposition möglichst gering sein. Demgegenüber kann die wirksame Hebellänge zu Beginn des Verriegelungsvorganges vergleichsweise groß sein; hierdurch werden relativ große Spannwege realisierbar. Beim Drehen oder Schwenken des Riegels in die Verriegelungsposition wird die wirksame Hebellänge dann - wie bei einem "Pelikanhaken" zunehmend kürzer und die von dem Riegel übertragbare Klemmkraft zunehmend größer. Grundsätzlich sind auch Exzenterstücke, die um eine Exzenterachse drehbar sind, als dreh- oder schwenkbare Riegel verwendbar.

Die erfindungsgemäßen "Sperrglieder" sind so gestaltet, daß sie von dem zugehörigen Riegel während dessen Dreh- bzw. Verschiebe- bzw. Schwenkbewegung zunehmend weit hintergriffen werden. Die einfachste Form eines Sperrgliedes kann daher in einem sogenannten Hinterschnitt bestehen, der in dem betreffenden ersten bzw. zweiten Rahmen im Bereich einer Ausnehmung vorgesehen wird. Anstelle einer einteiligen Ausbildung der Sperrglieder mit dem zugehörigen ersten bzw. zweiten Rahmen können die Sperrglieder auch an diesem einzeln, z. B. durch Schrauben, befestigt werden. Die letztere Befestigungsart empfiehlt sich vor allem bei Rahmen aus Kunststofformteilen, weil dadurch der Aufwand für Hinterschnitte vermieden wird. Die Sperrglieder können auch über diejenige Fläche ihres zugehörigen ersten oder zweiten Rahmens hinausragen, die mit dem anderen Rahmen beim Einbau in das Fahrzeugdach zusammengefügt wird. Zu diesem Zweck muß der andere (zweite oder erste) Rahmen eine entsprechende Ausnehmung bzw. Durchbrechung zur Aufnahme des Sperrgliedes aufweisen, wobei der Riegel - vorzugsweise - ebenfalls in diese Ausnehmung eingreift. Vorzugsweise weist der zweite oder erste Rahmen eine Durchbrechung quer zur Einbauebene auf.

Die Riegel können unter anderem auch an derjenigen Seite ihres zugehörigen (zweiten oder ersten) Rahmens abgestützt sein, die der Kontaktfläche mit dem anderen Rahmen gegenüberliegt; dies geschieht derart, daß der Riegel bei seinem Drehen oder Verschieben oder Schwenken in die Verriegelungsposition in die Durchbrechung ein- bzw. durch sie hindurchgreift und dabei das ihm gegenüberliegende Sperrglied hintergreift.

Unter "Einbauzustand" ist diejenige Situation zu verstehen, in der der eine Rahmen an der einen und der andere Rahmen an der gegenüberliegenden Seite der Dachhaut anliegt, und zwar unabhängig davon, ob beide Rahmen bereits gegeneinander verspannt sind oder noch nicht. Sobald die beiden Rahmen gegeneinander verspannt sind, befinden sich die Riegel in ihrer "Verriegelungsposition".

Als "Griffstücke" bzw. "Griffelemente" gelten mit den erfindungsgemäßen Riegeln kraft- oder formschlüssig verbindbare oder verbundene bzw. einstückig damit gebildete, in der Regel einarmige Hebel bzw. zungenförmige Gebilde: Am freien Ende der Griffstücke bzw. an den Griffelementen greift die Kraft für das Drehen oder Verschwenken bzw. für das Verschieben des erfindungsgemäßen Riegels in die Verriegelungsposition (bzw. aus ihr heraus) an. Z. B. kann ein Schraubendreher als Griffstück dienen, dessen Klinge in eine korrespondierende Ausnehmung des Riegels in radialer Richtung (bezüglich der Drehachse) eingreift. Nach einer anderen Ausführungsform der Erfindung ist das Griffstück mit dem Riegel dauerhaft, insbesondere einstückig, verbunden und taucht, vorzugsweise in der Verriegelungsposition, in einer Vertiefung des Deckelrahmens völlig oder so gut wie völlig unter, so daß störende Überstände am Deckelrahmen vermieden werden. Ebenso ist der Riegel vorzugsweise vollständig innerhalb des Deckelrahmenquerschnitts angeordnet, zumindest wenn er sich in der Verriegelungsposition befindet. Mehrere Riegel können auch gemeinsam mittels einer Schubstange verschoben werden.

Die dreh- oder schwenkbare Lagerung des Riegels in dem zugehörigen zweiten oder ersten Rahmen kann sowohl mittels Zapfen und damit korrespondierenden Zapfenaufnahmen, also über eine Lagerung im Drehpunkt erfolgen, als auch über gebogene Kulissenaufnahmen und darin eingreifende Zapfen, also derart, daß sich die Lagerflächen relativ weit außerhalb der Drehachse befinden. Die letztgenannte Anordnung hat den Vorteil, daß dadurch auch eine translatorische Bewegung des Riegels während seines Drehens oder Schwenkens - und nicht nur eine Rotationsbewegung - ermöglicht wird. Insbesondere verschiebbare Riegel können sich auch entlang einer Geraden bewegen.

Wenn, gemäß einer anderen Weiterbildung der Erfindung, der Riegel oder das Griffstück in der Verriegelungsposition verrastbar ist, wird dadurch die Stärke der Klemmkraft exakter definierbar als bei einem - grundsätzlich möglichen - Reibschluß des Riegels in der Verriegelungsposition.

Die Montage des Deckelrahmens kann dadurch noch vereinfacht werden, daß gemäß einer anderen Weiterbildung der Erfindung, der Klemmechanismus vor dem Verdrehen oder Verschieben oder Verschwenken des Riegels in die Verriegelungsposition in eine Fixierposition bringbar ist, in der der erste und zweite Rahmen in ihrer gegenseitigen Position gehalten werden. Dabei können bereits wesentliche oder aber auch nur ganz geringe Klemmkräfte auf die Dachhaut des Fahrzeuges ausgeübt werden. Dadurch kann der allseits exakte Sitz des Rahmens kontrolliert werden, bevor die Dachhaut zwischen den beiden Teilrahmen mit der endgültigen Klemmkraft eingeklemmt wird; insbesondere kann der exakte Sitz der üblicherweise an der Dachhaut anliegenden Dichtungselemente überprüft werden, bevor diese sich unter der Klemmkraft verformen. Eine Fixierposition kann z. B. dadurch hergestellt werden, daß die Riegel die Sperrglieder bereits ein bestimmtes Stück hintergreifen, oder daß die Riegel in anderer Weise verdreht, verschwenkt oder verschoben werden, bevor sie in die Verriegelungsposition verdreht oder verschoben oder verschwenkt werden. Ebenso ist ein erstes sanftes Einrasten des Klemmechanismus bei mehr oder weniger losem Zusammenfügen des ersten und zweiten Rahmens realisierbar. In der Fixierposition soll der Klemmechanismus verharren können, ohne daß der Monteur die Bauteile weiterhin festhalten muß.

Zweckmäßige weitere Ausgestaltungen des Erfindungsgegenstandes, die insbesondere eine sichere Bedienbarkeit und Funktiontüchtigkeit sowie einfache Herstellbarkeit gewährleisten, sind in weiteren Ansprüchen enthalten.

Die vorgenannten, erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der bevorzugte Ausführungsformen eines erfindungsgemäßen Sonnendachs dargestellt sind. In der Zeichnung zeigen:

Fig. 1a ein in ein Fahrzeugdach eingebautes Sonnendach in Ansicht von unten, wobei lediglich der halbe Innenrahmen zu sehen ist, der hier der "erste" Rahmen ist;

Fig. 1b von dem "ersten" Rahmen (gemäß Fig. 1a) eine ausschnittsweise Darstellung derselben Rahmenhälfte in Ansicht von oben;

Fig. 1c von demselben Sonnendach der halbe Außenrahmen, der hier der "zweite" Rahmen ist, in Ansicht von unten (Ansicht A gemäß Fig. 1d);

Fig. 1d von dem Außenrahmen gemäß Fig. 1c eine Ansicht von vorne (Ansicht F gemäß Fig. 1c);

Fig. 1e von derselben Außenrahmenhälfte wie in Fig. 1c/d eine Ansicht von oben (Ansicht G gemäß Fig. 1d und 1f);

Fig. 1f von demselben Außenrahmen einer Ansicht von hinten (Ansicht H gemäß Fig. 1c und 1e);

Fig. 1g von dem Innenrahmen gemäß Fig. 1a eine vergrößerte Detaildarstellung (Ausschnitt), wobei der Außenrahmen (von der Bildrückseite her) bereits aufgesteckt ist - allerdings ohne den erfindungsgemäßen Riegel und das erfindungsgemäße Griffstück;

Fig. 1h dasselbe Detail wie in Fig. 1g, jedoch mit Riegel und mit Griffstück - und zwar in der Verriegelungsposition;

Fig. 2a von demselben Sonnendach gemäß Fig. 1a bis 1h eine vertikale Schnittdarstellung quer durch den Deckelrahmen (entlang der Linie IIa-IIa gemäß Fig. 3a), wobei der Innen- und Außenrahmen die Dachhaut bereits zwischen sich einklemmen, während die eine dargestellte Riegel/Griffstück-Kombination in die Verriegelungsposition noch nicht verschwenkt ist;

Fig. 2b von demselben Sonnendach eine weitere vertikale Schnittdarstellung quer durch den Deckelrahmen (entlang der Linie IIb-IIb gemäß Fig. 1h und 3c) mit einer in die Verriegelungsposition verschwenkten Riegel/Griffstück-Kombination;

Fig. 3a von demselben Sonnendach ein Vertikalschnitt entlang des Deckelrahmens in noch nicht verriegelter Position der Riegel/Griffstück-Kombination (Schnitt entlang der Linie IIIa-IIIa gemäß Fig. 2a) - allerdings ohne Deckel und Deckeldichtung und zwar in dem Zustand bevor der Innen- und Außenrahmen die Dachhaut zwischen sich eingeklemmt haben;

Fig. 3b dasselbe Sonnendach in der gleichen Schnittdarstellung wie in Fig. 3a, wobei sich die Riegel/Griffstück-Kombination in einer Teilverriegelungsposition befindet;

Fig. 3c dasselbe Sonnendach in einer weiteren Schnittdarstellung entsprechend Fig. 3a und 3b, wobei sich die Riegel/Griffstück-Kombination in der Verriegelungsposition befindet - wiederum ohne Deckel und ohne Deckeldichtung;

Fig. 4a von dem Innenrahmen gemäß Fig. 1a/b eine perspektivische Detailansicht;

Fig. 4b von dem Außenrahmen gemäß Fig. 1f eine perspektivische Detailansicht;

Fig. 5a bis 5e fünf alternative Ausführungsformen eines erfindungsgemäßen Klemmechanismus als schematisierte perspektivische Detaildarstellung;

Fig. 6a eine weitere Ausführungsform eines erfindungsgemäßen Klemmechanismus im Vertikalschnitt entlang des Deckelrahmens (Schnitt entlang der Linie VIb-VIb gemäß Fig. 6c), wobei sich der Riegel in einer Fixierposition befindet;

Fig. 6b von derselben Ausführungsform eine weitere Schnittdarstellung entlang der Linie VIb-VIb gemäß Fig. 6c, wobei sich der Riegel in der Verriegelungsposition befindet;

Fig. 6c von demselben Klemmechanismus eine Ansicht von unten (Ansicht K gemäß Fig. 6b);

Fig. 7a bis 7c eine ähnliche Ausführungsform wie in Fig. 6a bis 6c, wobei der Riegel anstelle eines Griffstücks lediglich eine Vertiefung zur Aufnahme eines Griffstücks aufweist, in identischer Darstellungsart;

Fig. 8a von einer letzten Ausführungsform eines Sonnendaches den Innenrahmen (ausschnittsweise) im Vertikalschnitt entlang des Rahmenprofils (Schnitt entlang der Linie VIIIa-VIIIa gemäß Fig. 8b;

Fig. 8b denselben Innenrahmen in Ansicht von unten (Ansicht B gemäß Fig. 8a);

Fig. 9a von demselben Sonnendach den Außenrahmen in Seitenansicht (Ansicht C gemäß Fig. 9b);

Fig. 9b denselben Außenrahmen in Ansicht von unten (Ansicht D gemäß Fig. 9a);

Fig. 10a von demselben Sonnendach einen Riegel in Seitenansicht (Ansicht C gemäß Fig. 10b);

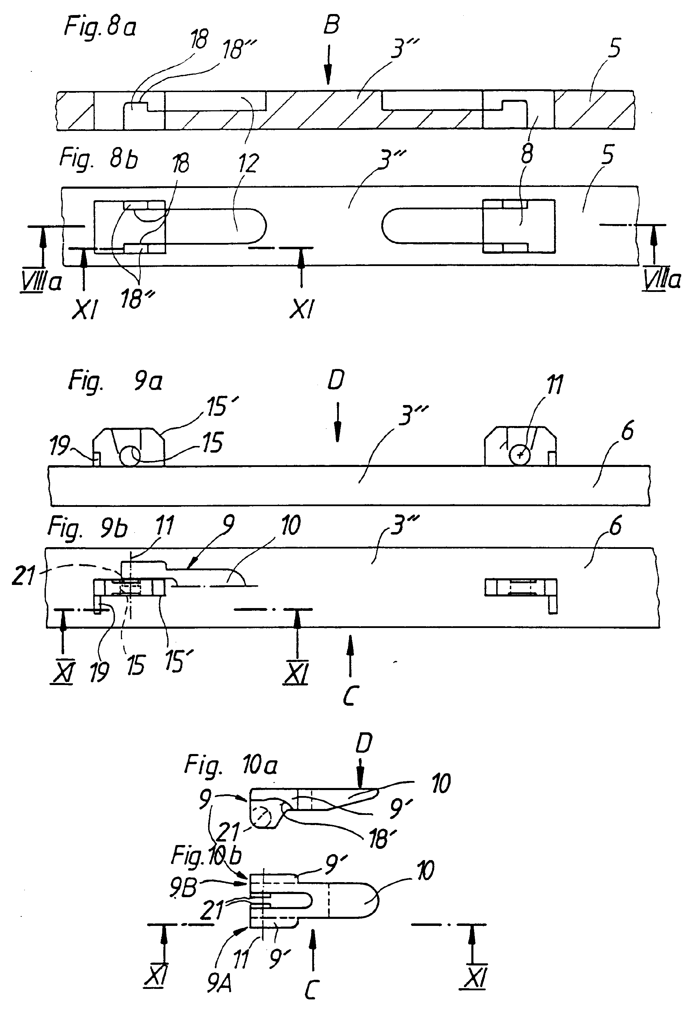

Fig. 10 b denselben Riegel in Ansicht von unten (Ansicht D gemäß Fig. 10a);

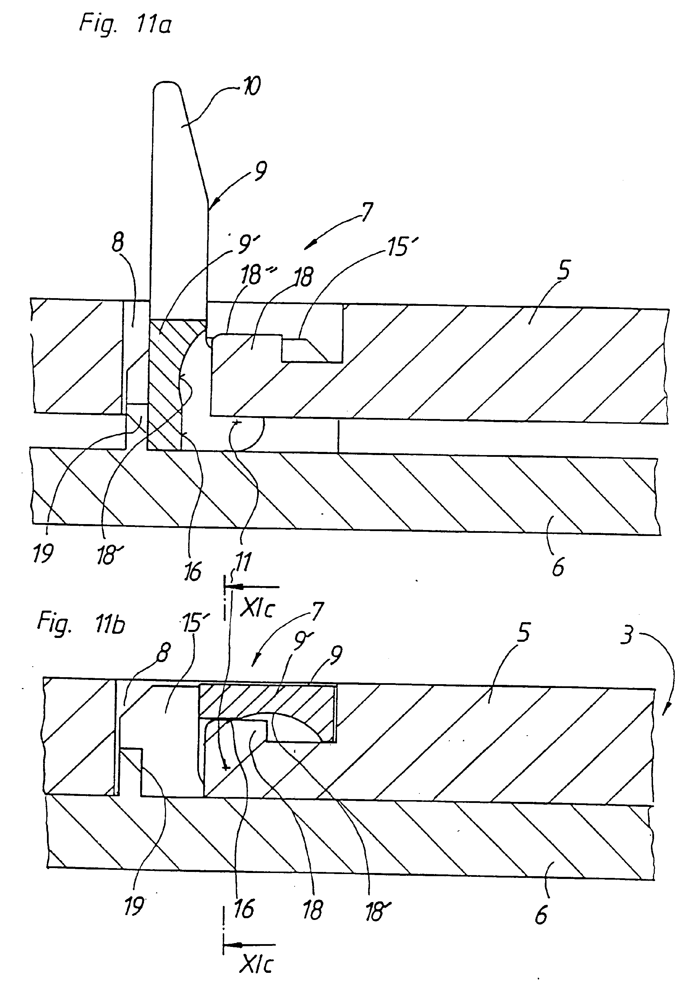

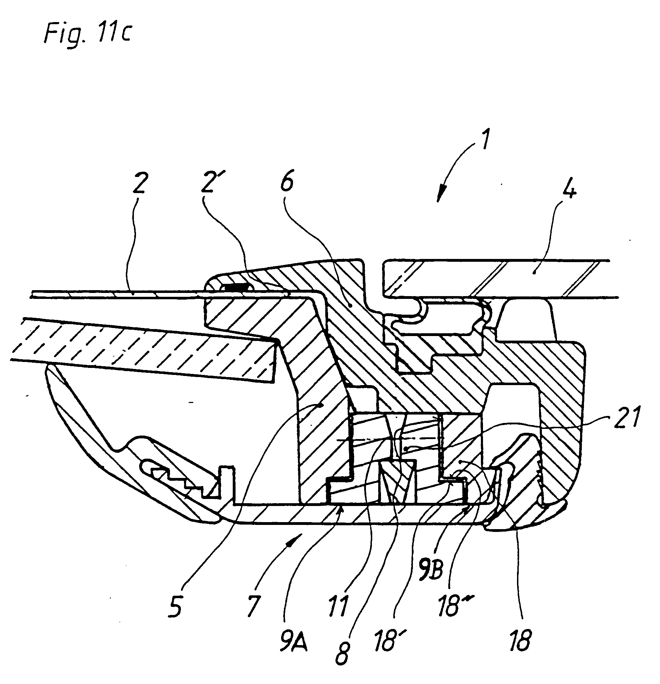

Fig. 11a von demselben Sonnendach eine vergrößerte Detaildarstellung einer Klemmvorrichtung im Vertikalschnitt (Schnitt entlang der Linie XI-XI gemäß Fig. 8b, 9b und 10b) im Einbauzustand mit noch nicht in die Verriegelungsposition geschwenktem Riegel;

Fig. 11b dasselbe Detail wie in Fig. 11a aber mit in die Verriegelungsposition verschwenktem Riegel;

Fig. 11c von dem Sonnendach gemäß Fig. 11b eine bevorzugte Ausführungsform im Radialschnitt (Schnitt entsprechend Linie XIc-XIc gemäß Fig. 11b);

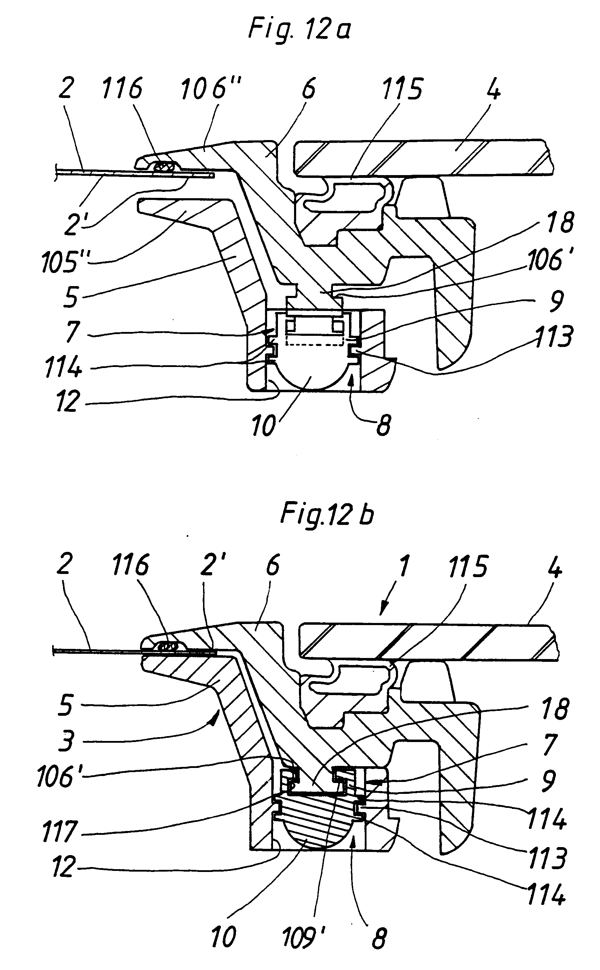

Fig. 12a/b von einem Sonnendach in einer weiteren alternativen Ausführungsform ein Vertikalschnitt durch den Deckelrahmen quer zur Erstreckungsrichtung der Rahmenstrebe, wobei sich in beiden Figuren das Sonnendach im Einbauzustand befindet, und zwar in Fig. 12a im noch nicht verspannten Zustand des Innen- und Außenrahmens und in Fig. 12b in der Verriegelungsposition, d. h. im verspannten Zustand;

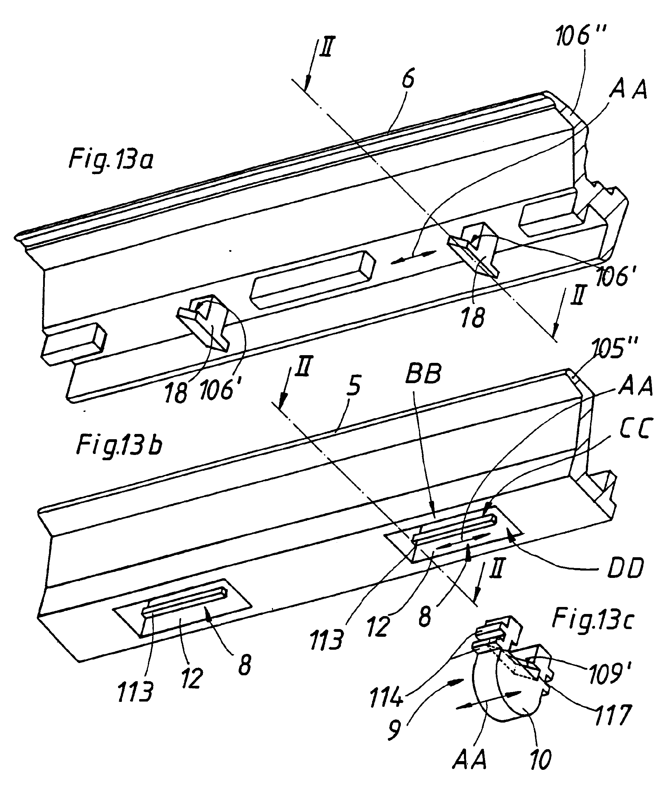

Fig. 13a bis 13c von demselben Sonnendach eine perspektivische Ansicht einer Rahmenstrebe 3' (Ansicht von unten in Explosionsdarstellung, wobei Fig. 13a einen Ausschnitt aus dem Außenrahmen, Fig. 13b einen Ausschnitt aus dem Innenrahmen und Fig. 13c einen Riegel zeigt);

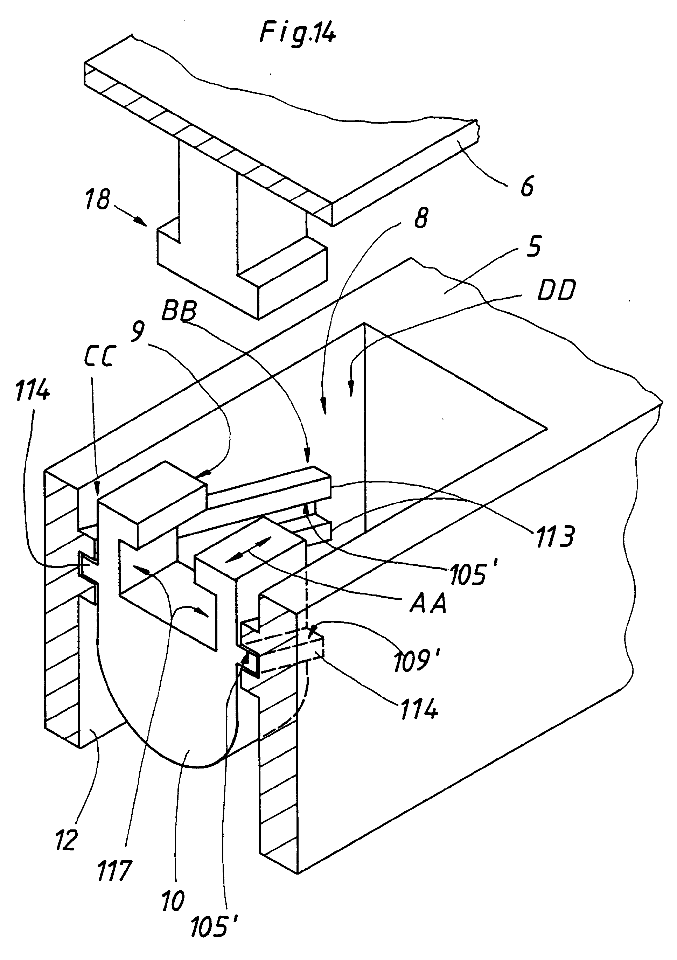

Fig. 14 eine zweite Ausführungsform einer Klemmvorrichtung für ein Sonnendach gemäß Fig. 12a bis 13c in vergrößerter, ausschnittsweiser perspektivischer Schnittdarstellung;

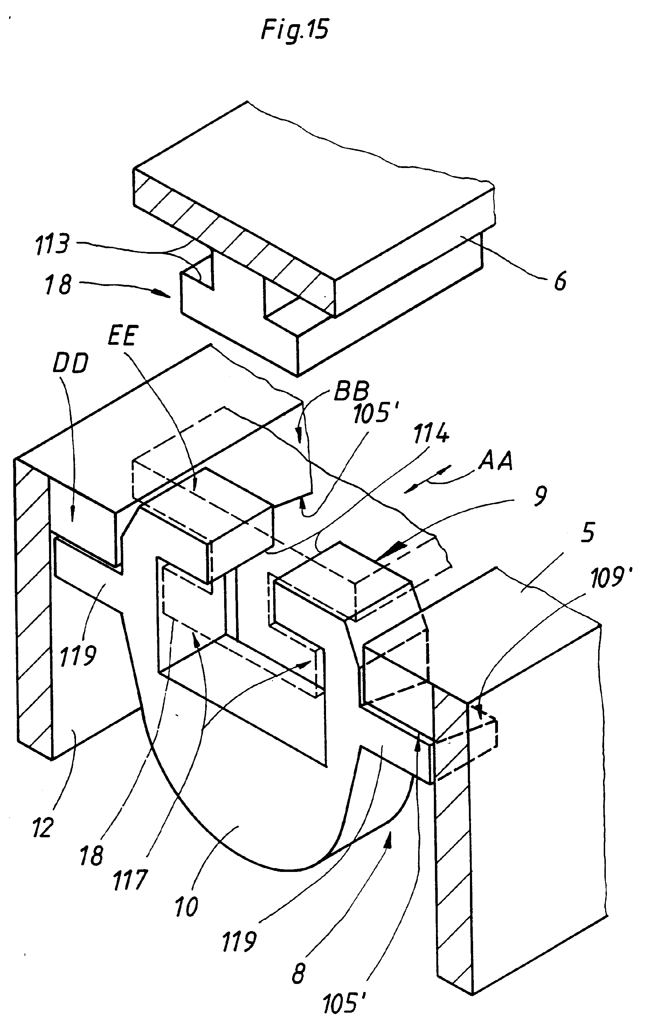

Fig. 15 eine dritte Ausführungsform einer Klemmvorrichtung für ein Sonnendach gemäß Fig. 12a bis 13c in vergrößerter, ausschnittsweiser perspektivischer Schnittdarstellung;

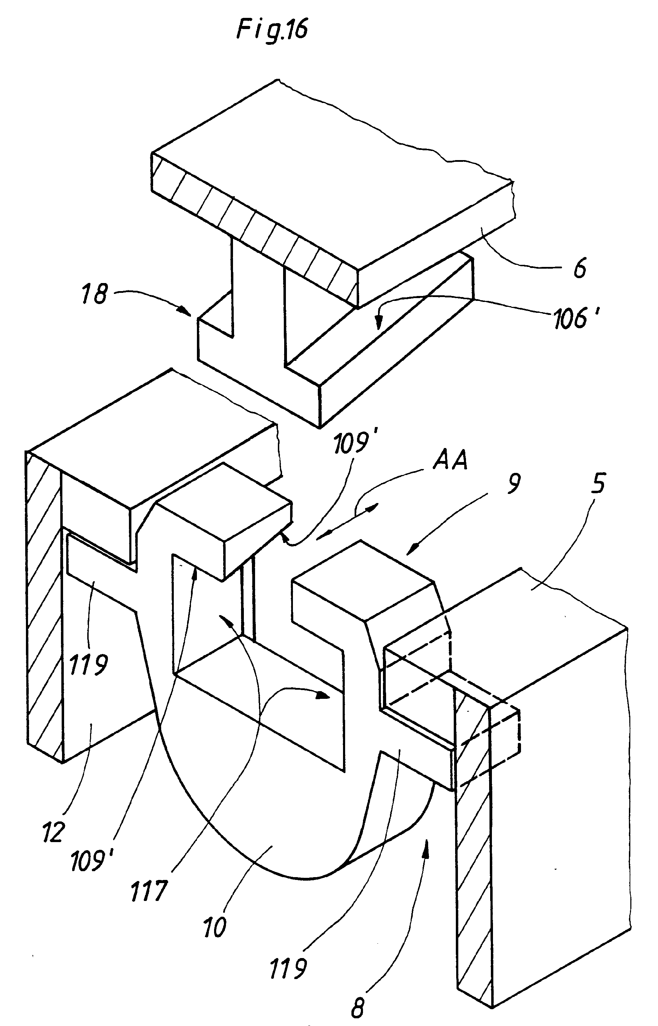

Fig. 16 eine vierte Ausführungsform einer Klemmvorrichtung für ein Sonnendach gemäß Fig. 12a bis 13c in vergrößerter, ausschnittsweiser perspektivischer Schnittdarstellung sowie

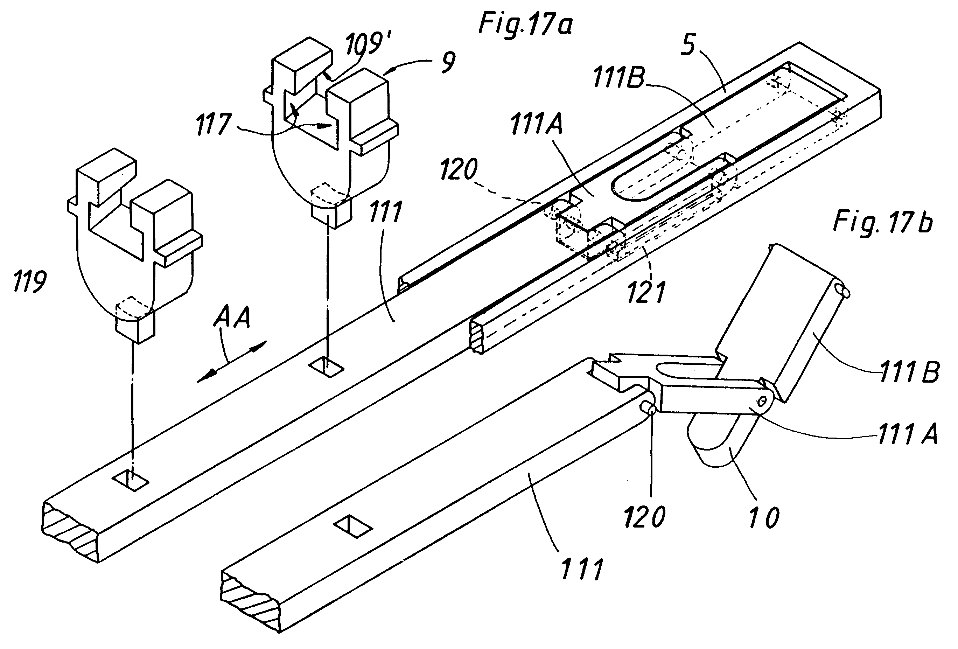

Fig. 17a/b von einer weiteren alternativen Ausführungsform eines Sonnendaches mehrere Riegel mit einem gemeinsamen Verschiebemechanismus in der der Verriegelungsposition ent sprechenden Strecklage (Fig. 17a) und einer der nicht verriegelten Position entsprechenden Knicklage (Fig. 17b) - in vergrößerter, ausschnittsweiser, schematisierter perspektivischer Darstellung, zum Teil in Explosionsdarstellung (Fig. 17a).

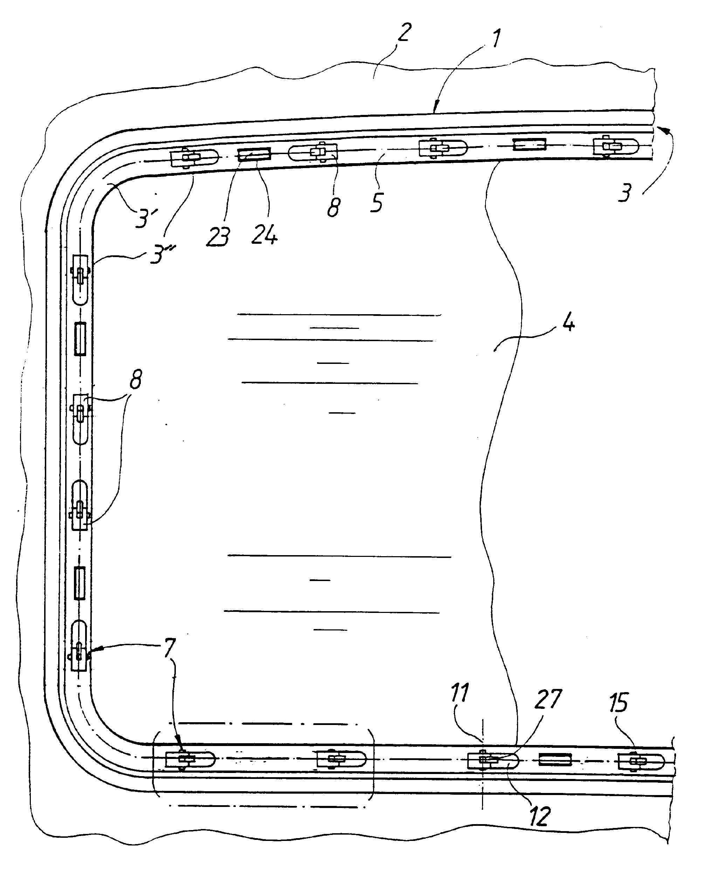

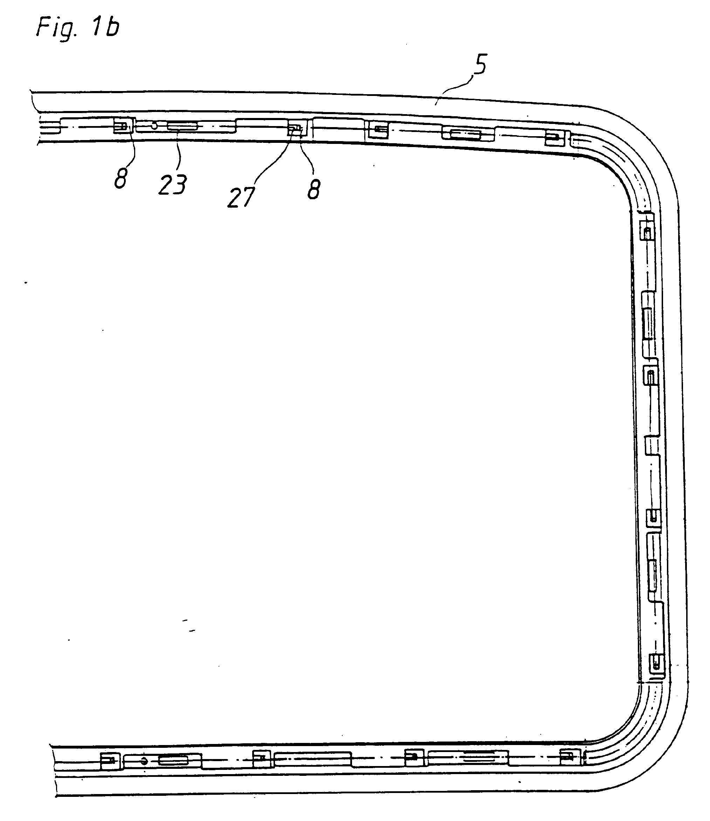

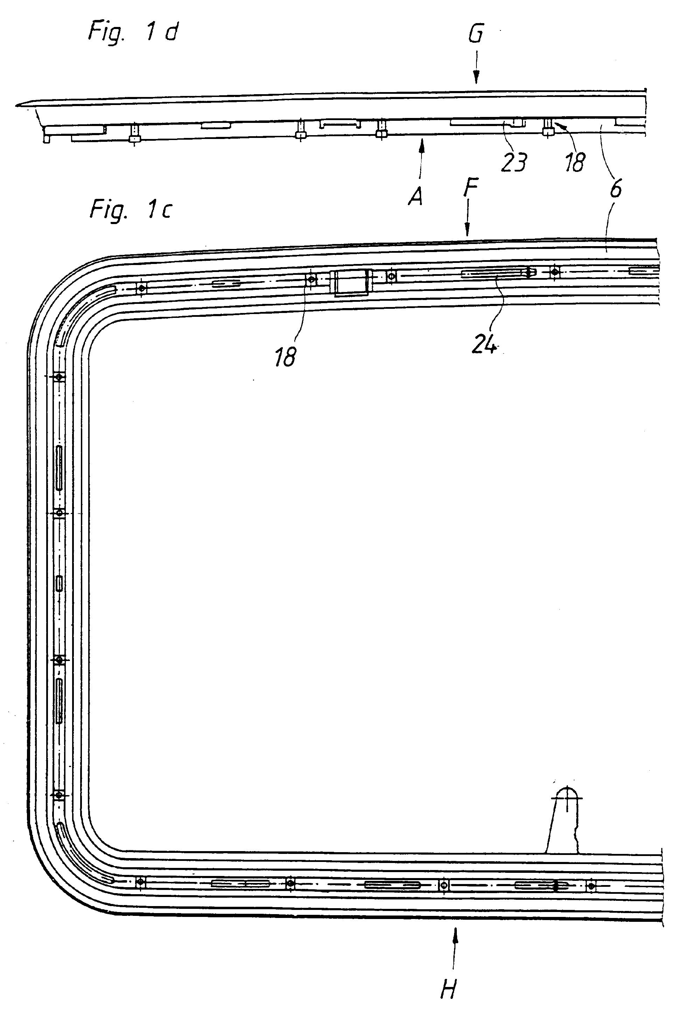

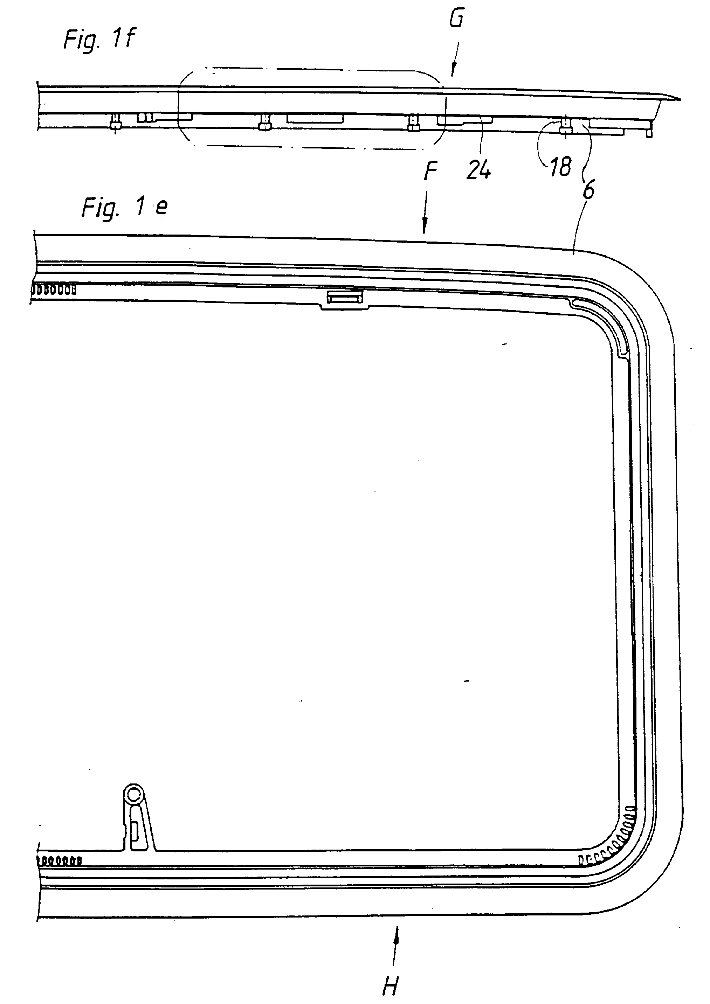

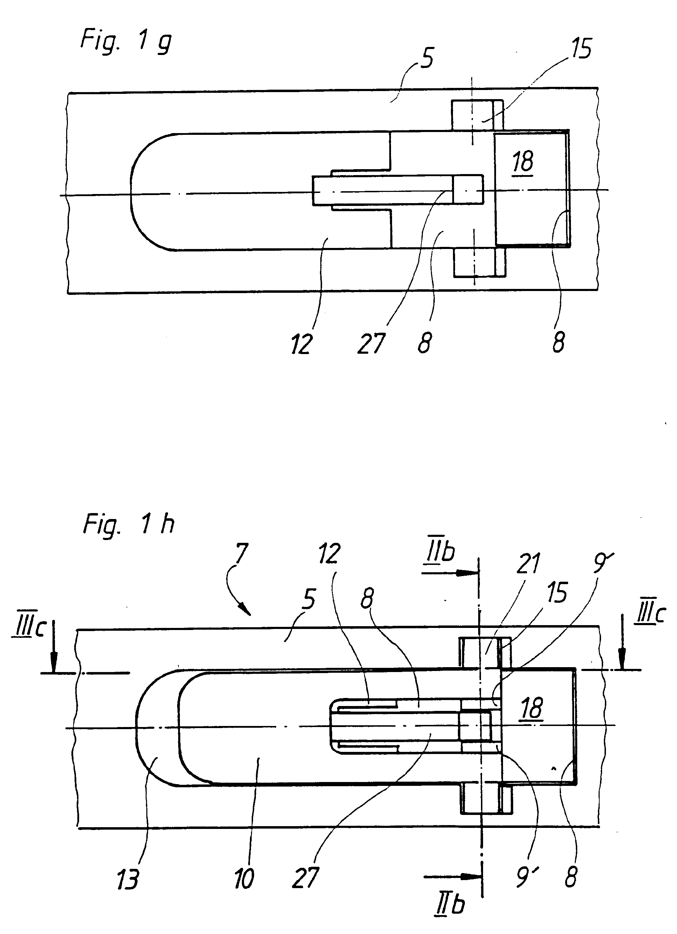

Gemäß Fig. 1a ist ein Sonnendach 1 in die Dachhaut 2 eines Fahrzeuges eingebaut. Das Sonnendach besteht aus einem Deckelrahmen 3 und einem in bekannter Weise öffen- und schließbaren, scheibenförmigen und mit der Dachhaut 2 annähernd eine gemeinsame Ebene bildenden Deckel 4. Der Betätigungsmechanismus des Deckels ist der Übersichtlichkeit halber fortgelassen, er kann z. B. so wie in der DE-C-32 41 652 gestaltet sein.

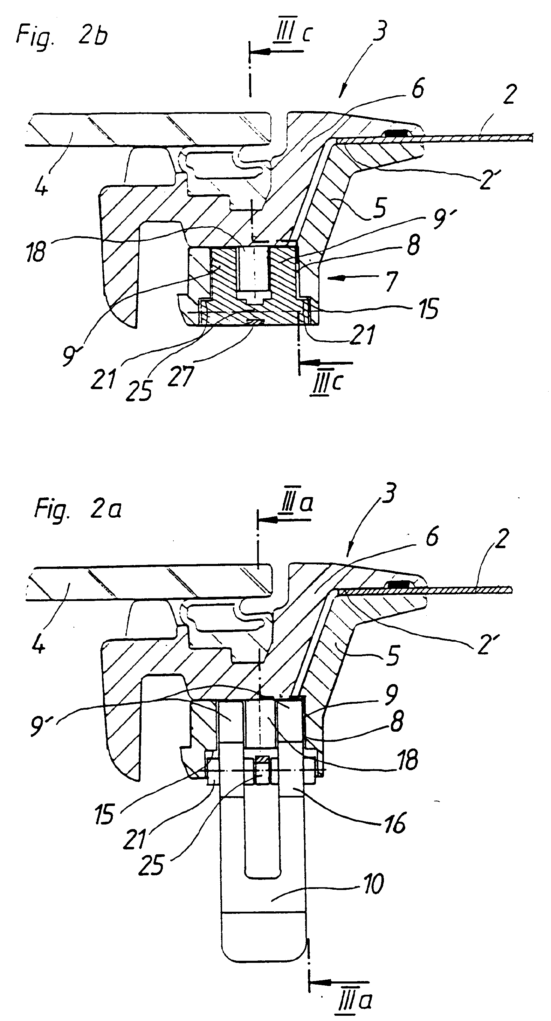

Gemäß Fig. 2a/b besteht der Deckelrahmen 3 aus einem ersten und einem zweiten Rahmen. In dem in Fig. 1a bis 4b dargestellten Ausführungsbeispiel ist der erste Rahmen ein von unten mit der Dachhaut 2 verspannbarer Innenrahmen 5 und der zweite Rahmen ein von oben gegen die Dachhaut 2 verspannbarer Außenrahmen 6. Natürlich kann auch der Außenrahmen die Funktion des ersten Rahmens und der Innenrahmen die Funktion des zweiten Rahmens übernehmen! Die Dachhaut 2 ist also Bereich des Öffnungsrandes 2′ zwischen dem Außenrahmen 6 und dem Innenrahmen 5 wasserdicht und mechanisch stabil eingeklemmt (siehe Fig. 2a/b). Auf diese Weise ist der Deckelrahmen am Fahrzeugaufbau festlegbar.

Miteinander hinsichtlich ihrer Form korrespondierende und im Einbauzustand miteinander fluchtende und dementsprechend formschlüssig ineinandergreifende Formschlußelemente 23 und 24 am ersten bzw. am zweiten Rahmen gewährleisten (wie aus Fig. 1a bis 1f ersichtlich) eine positionsgenaue Montage der ersten und zweiten Rahmen.

Anstelle der bisher üblichen Schrauben zum Verspannen des ersten und zweiten Rahmens mit der Dachhaut treten erfindungsgemäße Klemmvorrichtungen 7. Diese sind auf dem Umfang des Deckelrahmens 3 gleichmäßig verteilt. Z. B. werden bei dem erfindungsgemäßen Sonnendach ebenso viele Klemmvorrichtungen vorgesehen, wie Schrauben bei den bekannten Sonnendächern. Die Eckbereiche 3′ des Deckelrahmens 3 bleiben (gemäß Fig. 1a) bevorzugt frei von Klemmvorrichtungen. Gleichwohl können auch in diesem Falle ausreichend große Spannkräfte auf diese Eckbereiche ausgeübt werden. Hierzu sind die Schwenkachsen der nachfolgend noch zu erläuternden Riegel vorzugsweise rechtwinklig zur Erstreckungsrichtung der Rahmenstreben 3″ des Deckelrahmens 3 angeordnet. Weiterhin weisen zu diesem Zweck die freien Enden der noch zu erläuternden Griffstücke 10 in der Verriegelungsposition von den Eckbereichen 3′ fort, so daß die Schwenkachsen der Riegel unmittelbar am Übergang zwischen den Eckbereichen 3′ und den Rahmenstreben 3″ angeordnet werden können.

Die den erfindungsgemäßen Klemmechanismus bildenden Klemmvorrichtungen 7 sind wie folgt aufgebaut:

Der erste Rahmen - im Beispiel gemäß Fig. 1a bis 4b also der Innenrahmen 5 - weist auf seinem Umfang verteilte Durchbrechungen 8 auf; diese haben einen bevorzugt mehreckigen, insbesondere im wesentlichen rechteckige Querschnitte. Seitlich dieser Durchbrechungen 8 sind Lagerflächen 15 am Innenrahmen 5 vorgesehen, die als Schwenklagerflächen für die noch zu erläuternden Riegel dienen.

Gemäß Fig. 1c bis 1f weist der zweite Rahmen - hier also der Außenrahmen 6 - Sperrglieder 18 auf, welche derart auf dem Umfang des Außenrahmens 6 verteilt sind, daß sie in die Durchbrechungen 8 des Innenrahmens 5 hineinschiebbar sind.

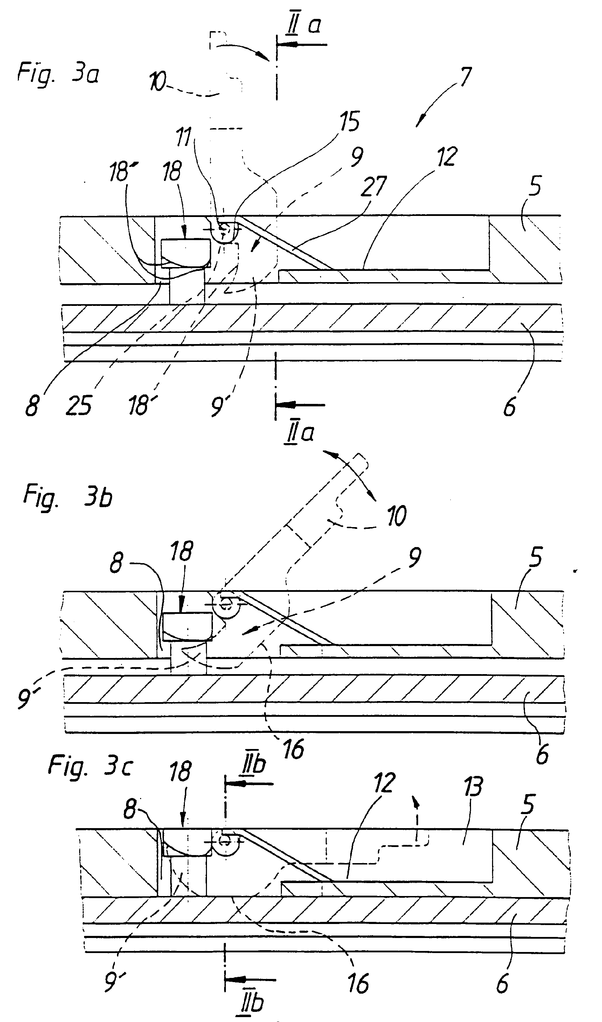

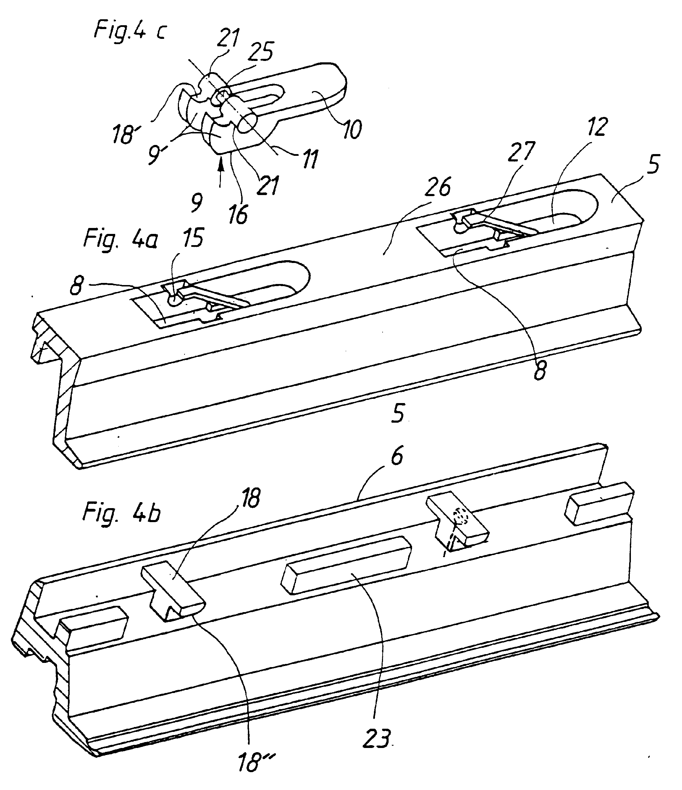

Wie aus Fig. 3a bis 3c sowie 4b besonders anschaulich entnehmbar, weist jedes Sperrglied 18 auf seiner vom Innenrahmen 5 fort- und zum Außenrahmen 6 hinweisenden Unterseite eine oder mehrere Gleitflächen 18″ für die noch zu erläuternden Riegel 9 auf.

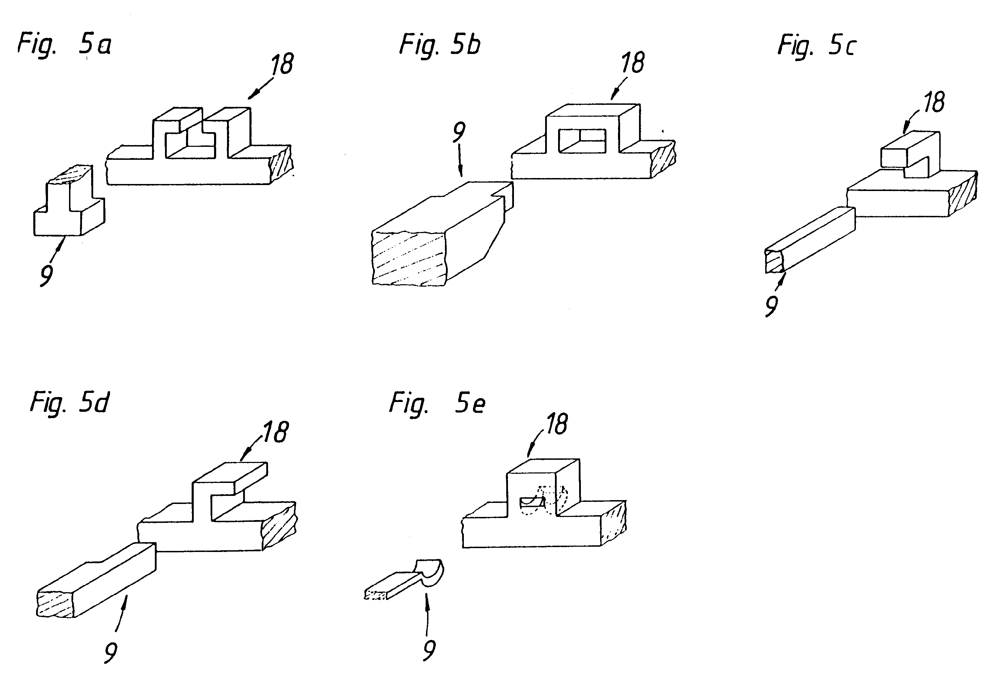

Wie aus Fig. 5a bis 5e ersichtlich, können die Sperrglieder 18 - und dementsprechend auch die Riegel - die unterschiedlichsten Ausgestaltungen aufweisen. Eine besonders stabile und für die Übertragung von Klemmkräften günstige Ausführungsform eines Sperrgliedes ist den Fig. 3a bis 3c und 4b entnehmbar. Das dort dargestellte Sperrglied 18 hat eine im wesentlichen T-förmige Gestalt. Bei dieser werden die beiden T-Arme auf ihren unterseitigen Gleitflächen 18″ von dem noch zu erläuternden Riegel 9 hintergriffen. Das freie Ende des T-Steges ist mit dem Außenrahmen einstückig verbunden. Jedoch können die Sperrglieder auch sehr vorteilhaft mittels Schrauben am Außenrahmen 6 befestigt sein; dies ist in Fig. 4b als Alternative gestrichelt dargestellt.

Bei der Ausführungsform gemäß Fig. 3a bis 4c besteht jeder Riegel 9 aus zwei parallel zueinander angeordneten hakenförmig gebogenen Armen 9′, die mittels einer Verbindungsstrebe 25 einerseits und einem Griffstück 10 andererseits verbunden sind. Die Verbindungsstrebe 25 ist etwa konzentrisch zur Schwenkachse 11 des Riegels 9 angeordnet. Seitlich (außerhalb) neben den Armen 9′ des Riegels 9 ist je ein nach außen weisender Schwenklagerzapfen 21 vorgesehen. Die (radiale) Umfangsfläche jedes Schwenklagerzapfens 21 korrespondiert mit den Lagerflächen 15 im Innenrahmen 5. Die Schwenklagerzapfen 21 sind vorzugsweise von der fahrzeuginnenseitigen Horizontalfläche 26 her in den Innenrahmen 5, d. h. in die die Lagerflächen 15 bildenden Ausnehmungen einsetzbar. Eine elastisch verbiegbare Zunge 27, die am Innenrahmen 5 befestigt oder mit diesem einstückig ausgebildet ist, sichert den eingebauten Riegel 9 im Bereich dessen Verbindungsstrebe 25 vor dem Herausfallen.

Wie aus der Folge der Fig. 3a bis 3c entnehmbar, greifen die Arme 9' des Riegels 9 in die Durchbrechung 8 des Innenrahmens 5 ein. Nach dem bloßen Zusammenfügen des Außen- und Innenrahmens steht der Riegel und das zugehörige Griffstück 10 zunächst noch etwa senkrecht zur Ebene des Deckelrahmens 3. Das Griffstück 10 einerseits und der Riegel 9 andererseits sind bezüglich der Schwenkachse 11 gegenüberliegend angeordnet. Beim Verschwenken des Griffstücks 10 in Richtung auf den Deckelrahmen 3 hintergreifen die Arme 9' des Riegels 9 die T-Arme des Sperrgliedes 18. Die etwa hakenförmigen Gleitflächen 18' der Arme 9' gleiten dabei entlang der Gleitflächen 18" des Sperrgliedes 18. Bevorzugt kommen die Gleitflächen 18' und 18" in der in Fig. 3c dargestellten Verriegelungsposition großflächig zur gegenseitigen Anlage. In der Verriegelungsposition ist das Sperrglied 18 am weitesten in die Durchbrechung 8 des Innenrahmens 5 hineingezogen. In dieser Position liegt eine der Gleitfläche 18' gegenüberliegende ebene Oberfläche 16 des Riegels 9 - im Anschluß an eine zuvor erfolgte, vorübergehende elastische Verformung im Bereich der Klemmvorrichtung - am Außenrahmen 6 rastend an. In dieser Position ist das Griffstück 10 in eine Vertiefung 12 des Innenrahmens 5 völlig eingetaucht. Die Vertiefung 12 schließt sich unmittelbar an die Durchbrechung 8 an und ist ausreichend groß, um eine Eingriffmulde 13 am freien Ende des Griffstücks 10 zu bilden, durch die ein etwa erforderliches Öffnen des Riegels erleichtert wird.

Wie der Figurenfolge 3a bis 3c entnehmbar, ermöglicht die erfindungsgemäße Kombination eines Sperrgliedes 18 mit einem schwenkbaren Riegel 9 einen relativ großen Spannweg, wobei mit zunehmendem Verschwenken des Riegels 9 der zwischen dem Sperrglied 18 und der Schwenkachse 11 des Riegels 9 wirksame Hebelarm zunehmend kürzer wird. Für das Aufbringen der zum Verschwenken des Riegels 9 erforderlichen Kraft reicht es aus, wenn die wirksame Länge des Griffstücks 10 ein Mehrfaches der wirksamen Hebellänge zwischen dem Sperrglied 18 und der Schwenkachse 11 beträgt.

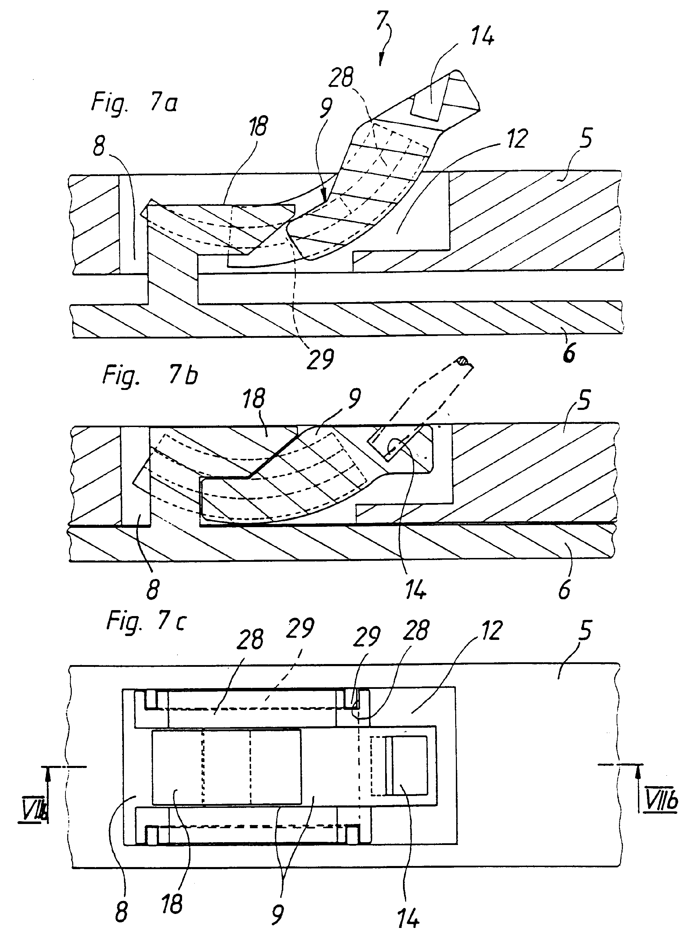

Wenn der für die Unterbringung der Griffstücke 10 erforderliche Platz nicht ausreicht, kann als Griffstück auch ein Schraubendreher od. dgl. verwendet werden, der in einen Schlitz 14 des Riegels 9 einschiebbar ist (siehe Fig. 7a bis 7c).

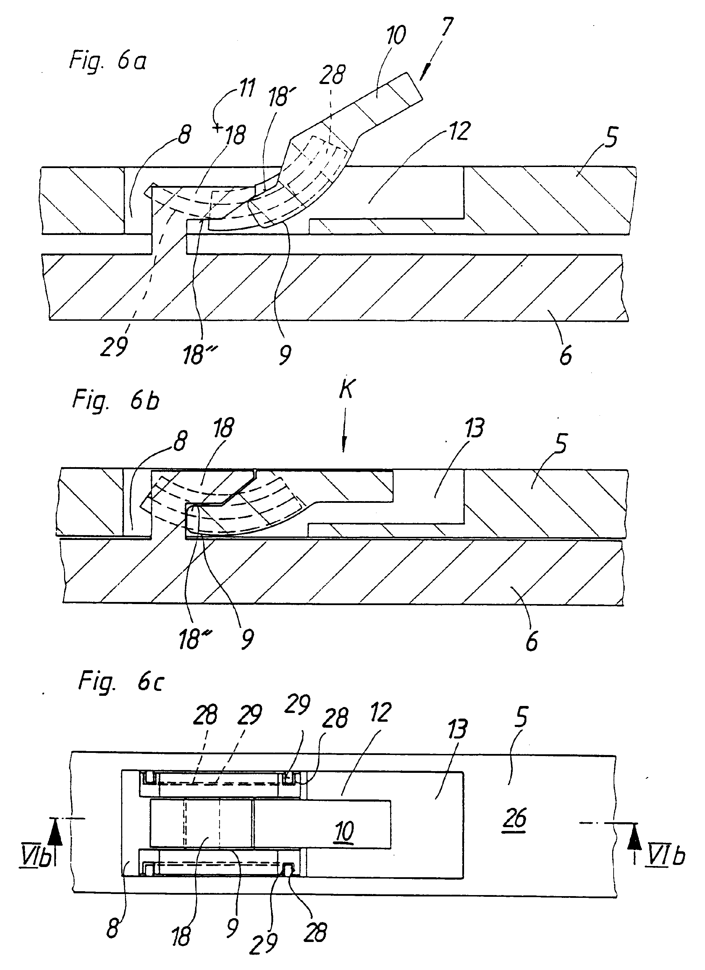

In Fig. 6a bis 7c ist eine weitere alternative Ausführungsform eines Riegels 9 und eines Sperrgliedes 18 dargestellt. Hierbei hat das Sperrglied eine in Richtung auf den noch nicht verschwenkten Riegel weisende Hakenform, wie sie sich schematisiert aus Fig. 5c ergibt. Der wesentliche Unterschied zur Ausführungsform gemäß Fig. 3a bis 4c besteht jedoch in der andersartigen Lagerung des Riegels 9 im Innenrahmen 5: Anstelle von Schwenklagerzapfen sind nämlich nunmehr kreisbogenförmige Führungsnuten 28 in den rechten und linken Seitenflächen des Riegels 9 eingearbeitet. In diese Führungsnuten 28 greifen korrespondierende Führungsstege 29 ein, die im Innenrahmen 5 seitlich der Durchbrechung 8 angeordnet sind. Durch diese Art der Lagerung wird einerseits erreicht, daß der Riegel 9 beim Verschwenken neben der Verschwenkbewegung um die Schwenkachse auch eine translatorische Bewegung in Richtung des Verriegelungselementes ausführt. Hierdurch wird eine besonders hohe Sicherheit gegen unbeabsichtigtes selbsttätiges Öffnen der Klemmvorrichtung erreicht. Darüber hinaus können durch diese Art der Lagerung relativ große Lagerflächen realisiert werden. Hierdurch wird die Klemmkraft großflächig verteilt; dies ist insbesondere für Klemmvorrichtungen aus - wie bevorzugt - Kunststoff von Vorteil und erhöht den Reibungswiderstand gegen unbeabsichtigtes Lösen der Klemmvorrichtung.

Bei dem derzeit am meisten bevorzugten Ausführungsbeispiel gemäß Fig. 8a bis 11c ist - im Gegensatz zu den vorangehenden Ausführungsbeispielen - das Sperrglied 18 an dem die Durchbrechung 8 aufweisenden Innenrahmen 5 und der Riegel 9 entsprechend an dem eine Durchbrechung nicht aufweisenden Außenrahmen 6 angeordnet. Hierdurch bedingt muß der Riegel beim Zusammenbau des Außen- und Innenrahmens zunächst in die Durchbrechung hinein bzw. durch die Durchbrechung 8 hindurch gesteckt werden (siehe Fig. 11a) ehe er in die Verriegelungsposition gemäß Fig. 11b/c verschwenkt werden kann. In dem Ausführungsbeispiel gemäß Fig. 8a bis 11c ist fernerhin eine andere Schwenklagerung des Riegels 9 als in den vorangehenden Ausführungsbeispielen vorgesehen - und zwar erfolgt die Lagerung mittels eines Lagerbocks 15', der an dem Außenrahmen 6 befestigt bzw. mit diesem einstückig gebildet ist. Dieser Lagerbock 15' ist etwa scheibenförmig ausgebildet und weist eine quer zur Rahmenstrebe 3" angeordnete Ausnehmung, insbesondere eine Durchbohrung auf, deren Zylinderfläche als Lagerfläche 15 dient. Dies ergibt sich am besten aus Fig. 9a/b.

Wie besonders aus Fig. 10a/b ersichtlich, weist bei diesem Ausführungsbeispiel der Riegel 9 wiederum zwei Arme 9' auf, die parallel zueinander angeordnet und über ein Griffstück 10 miteinander verbunden sind, so daß insgesamt ein in Ansicht von oben bzw. unten im Prinzip U-förmiger Körper entsteht. An den inneren U-Schenkelflächen dieses Körpers sind aufeinander zugerichtete Schwenklagerzapfen 21 angeordnet. Der gesamte Riegel 9 ist derart federelastisch ausgebildet, daß er unter leichter Spreizung der die Arme 9' tragenden U-Schenkel auf den Lagerbock 15' aufschiebbar ist, bis die Schwenklagerzapfen 21 in die Durchbohrung des Lagerbockes 15' rastend eingreifen. Die Schwenklagerzapfen 21 und die Lagerflächen 15 bilden dann das Schwenklager des Riegels 9. Ein Rastnocken 19 am Lagerbock 15' hält den Riegel 9 in der senkrechten, d. h. nicht verriegelten Position, um das Zusammenfügen des Außen- und Innenrahmens zu erleichtern (siehe insbesondere Fig. 11a).

Die Sperrglieder 18 mit ihren Gleitflächen 18" sind an den seitlichen Rändern der Durchbrechung 8 am Innenrahmen 5 paarweise gegenüberliegend angeordnet. Die übrigen Bauteile haben die gleiche Funktion und entsprechend gleiche Bezugszeichenbezifferung wie in den vorangehenden Ausführungsbeispielen. Der Übersichtlichkeit halber wurde in Fig. 8a bis 11b darauf verzichtet, den Außen- bzw. Innenrahmen in allen Details darzustellen; dies ist beispielhaft bereits in Fig. 2a/b und 4a/b sowie in Fig. 11c geschehen. Die Ausführungsform gemäß Fig. 8a bis 11c ist besonders einfach herstellbar und gestattet die problemlose Übertragung hoher Klemmkräfte bei gleichzeitiger Erzielung relativ großer Spannwege.

Aus Fig. 12a/b sowie den weiteren Figuren ist ersichtlich, daß der Außenrahmen 6 und der Innenrahmen mittels einer weiteren alternativen Klemmvorrichtung 7 derart miteinander verspannbar sind, daß sie den Öffnungsrand 2' der Dachhaut 2 des Fahrzeugaufbaus zwischen sich einklemmen, wobei eine Rahmendichtung 116 das Eindringen von Feuchtigkeit zwischen der Dachhaut 2 und dem Deckelrahmen 3 verhindert. Die von dem Deckelrahmen 3 freigelassene Fahrzeugdachöffnung ist von einem vorzugsweise öffenbaren Deckel 4 unter Zwischenfügung einer Deckeldichtung 115 gedichtet verschließbar.

In den Durchbrechungen 8 sind als rahmenseitige Führungselemente 113 dienende Leisten vorgesehen. Diese erstrecken sich parallel zueinander und parallel zur Erstreckungsrichtung der Rahmenstreben 3" und sie sind jeweils am Rand der Durchbrechung 8 angeordnet, insbesondere einteilig mit dem Innenrahmen 5 verbunden.

Innerhalb jeder Durchbrechung 8 ist ein verschiebbarer Riegel 9 angeordnet. Der Riegel 9 weist eine Nut bildende riegelseitige Führungselemente 114 auf. Diese sind korrespondierend zu den rahmenseitigen Führungselementen 113 geformt und angeordnet und ermöglichen ein verkantungsfreies geführtes Verschieben des Riegels 9 innerhalb der Durchbrechung 8 entlang der Verschieberichtung AA (siehe Fig. 13b/c). Durch die Führungselemente 113 und 114 ist der Riegel 9 gleichzeitig derart am Innenrahmen 5 abgestützt, daß er etwa senkrecht zur Ebene der Dachhaut 2 Klemmkräfte auf den Außenrahmen 6 übertragen kann.

Das Verschieben des Riegels 9 kann ohne ein Werkzeug erfolgen. Zu diesem Zweck ist der Riegel mit einem Griffelement 10 versehen, welches z. B. zwischen dem Daumen und dem Zeigefinger einer Hand des Monteurs festgehalten werden kann. Auch das Griffelement 10 verschwindet völlig in einer von der Durchbrechung 8 gebildeten Vertiefung 12, so daß die Klemmvorrichtung 7 insgesamt innerhalb des Deckelrahmenquerschnittes angeordnet ist, aus diesem also nicht nach außen hervorsteht - und zwar zumindest in der Verriegelungsposition B gemäß Fig. 12b.

Der Außenrahmen 6 ist mit umfangsverteilt angeordneten Sperrgliedern 18 versehen; diese können mit ihm einstückig gebildet oder durch Verschrauben oder ähnliches verbunden sein. Die Sperrglieder 18 sind so angeordnet, daß sie nach dem losen Zusammenfügen des Außenrahmens 6 mit dem Innenrahmen 5 mit je einem Riegel 9 zusammenwirken können. Hierzu taucht bei den dargestellten Ausführungsbeispielen das Sperrglied 18 des Außenrahmens 6 in die Durchbrechung 8 des Innenrahmens 5 ein, und der Riegel 9 weist hierzu eine Sperrgliedaufnahme 117 auf, die derart geformt und angeordnet ist, daß sie mit dem Sperrglied 18 korrespondiert und eine Abstützung des Riegels 9 auch am Außenrahmen 6 ermöglicht - und zwar derart, daß Zugkräfte (Klemmkräfte) zwischen dem Riegel 9 und dem Sperrglied 18 übertragen werden, die bevorzugt senkrecht zur Ebene der Dachhaut 2 wirken, zumindest aber eine Kraftkomponente senkrecht zur Ebene der Dachhaut 2 aufweisen. Die Sperrglieder 18 und die Sperrgliedaufnahmen 117 sind fernerhin so geformt und angeordnet, daß der Riegel 9 bezüglich des Sperrgliedes 18 in Verschieberichtung AA entlang diesem verschiebbar ist.

Die Sperrgliedaufnahme 117 und das Sperrglied 18 können auch eine Führungsfunktion übernehmen, wie dies auch die Führungselemente 113 und 114 tun. Dementsprechend können auch die Führungselemente 113 und 114 die Funktion eines Sperrgliedes bzw. einer Sperrgliedaufnahme übernehmen. Entscheidend ist nur, daß der Riegel 9 sowohl bezüglich des Innenrahmens 5 als auch bezüglich des Außenrahmens 6 in Verschieberichtung AA verschiebbar ist und zumindest in der Verriegelungsposition BB Zugkräfte (Klemmkräfte) zwischen dem Außenrahmen 6 und dem Innenrahmen 5 ausübt.

Wie aus Fig. 13a bis 13c ersichtlich ist, sind einerseits am Deckelrahmen und andererseits am Riegel Verriegelungsdruckflächen 106' bzw. 109' vorgesehen. Diese Verriegelungsdruckflächen bilden einen Winkel zwischen vorzugsweise 1° und 45° mit der Verschieberichtung AA des Riegels 9 und zwar derart, daß diese Verriegelungsdruckflächen bezüglich der Verschieberichtung AA ansteigend bzw. fallend, also keilförmig zur Verschieberichtung orientiert sind. Zu jeder Klemmvorrichtung 7 gehört ein Paar dieser zueinander entgegengesetzt angeordneten, d. h. miteinander korrespondierenden Verriegelungsdruckflächen, welche derart geformt und angeordnet sind, daß sie beim Verschieben des Riegels in die Verriegelungsposition B gegenseitig flächig zur Anlage kommen und aufeinander gleiten. Durch die keilförmige Orientierung der Verriegelungsdruckflächen können der Innenrahmen 5 und der Außenrahmen 6 aufeinander zu- bzw. voneinander fortbewegt werden. Es entsteht eine zunehmend große Klemmkraft, sobald die z. B. flanschförmigen Auskragungen 106" und 105" des Außen- und Innenrahmens auf der Ober- und Unterseite der Dachhaut 2 zur Anlage kommen. Sobald der Riegel 9 seine Verriegelungsposition B erreicht hat, ist in der Regel auch die maximal mögliche Klemmkraft zwischen dem Außen- und Innenrahmen erreicht. Ein unerwünschtes selbsttätiges Zurückverschieben des Riegels 9 ist wegen der durch die Keilform bedingten hohen Anpreßkraft und damit verbundenen Selbsthemmung nicht möglich.

Wie sich aus Fig. 13a bis 13c ferner ergibt, kann der mögliche Verschiebeweg des Riegels 9 so groß gewählt werden, daß der Riegel 9 auch dann noch verschiebbar bezüglich der Rahmenstrebe geführt ist, wenn das Sperrglied 18 und die Sperrgliedaufnahme 117 nicht mehr im Eingriff miteinander stehen. Dies ist der Fall, wenn sich der Riegel in der in Fig. 13b mit CC bezeichneten Startposition befindet, d. h. etwa am Anfang des geführten Verschiebeweges. Bereits bevor der Außenrahmen 6 und der Innenrahmen 5 zusammengefügt werden und mithin das Sperrglied 18 des Außenrahmens 6 in die Durchbrechung 8 des Innenrahmens 5 eintaucht, kann sich der Riegel 9 in dieser Startposition CC befinden, weil er in dieser Position das Eintauchen des Sperrgliedes 18 in die Durchbrechung 8 nicht behindert.

Schließlich ist die Durchbrechung 8 etwas länger als die rahmenseitigen Führungselemente 113 ausgebildet. Dadurch entsteht in der Verlängerung der Führungselemente 113 ein Einfädelbereich DD, in den der Riegel 9 etwa senkrecht zur Verschieberichtung AA in die Durchbrechung 8 eingeführt werden kann. Erst durch ein Verschieben des Riegels 9 in Verschieberichtung AA kommen die korrespondierenden Führungselemente 113 und 114 bzw. das Sperrglied 18 und die damit korrespondierende Sperrgliedaufnahme 117 in Eingriff miteinander. In der Darstellung gemäß Fig.12a befindet sich der Riegel 9 bereits in der Startposition A, in der er zwar mit dem rahmenseitigen Führungselement 114 im Eingriff steht, nicht aber mit dem Sperrglied 18.

In den Fig. 14 bis 16 sind alternative Ausführungsformen zu den Klemmvorrichtungen gemäß Fig. 12a bis 13c dargestellt:

Gemäß Fig. 14 befinden sich die rahmenseitigen Führungselemente 113 wiederum am Innenrahmen 5. Sie sind bezüglich der Verschieberichtung AA jedoch keilförmig geneigt und weisen dementsprechend Verriegelungsdruckflächen 105′ auf, die mit den Verriegelungsdruckflächen 109′ der entsprechend geneigten riegelseitigen Führungselemente 114 zusammenwirken. In diesem Fall kommt also den Führungselementen 113 und 114 eine Doppelfunktion zu, während das Sperrglied 18 am Außenrahmen 6 und die Sperrgliedaufnahme 117 am Riegel 9 lediglich die Funktion der gegenseitigen Klemmkraftübertragung haben, also eine gegenseitige Abstützung bei,gleichzeitiger Gewährleistung der Verschiebbarkeit des Riegels 9 in der Verschieberichtung AA darstellen. Bei dieser Ausführungsform muß (im Gegensatz zur Ausführungsform gemäß Fig. 12a bis 13c) der Riegel 9 zunächst in den Einfädelbereich DD der Durchbrechung 8 des Innenrahmens 5 eingeführt und in die Startposition CC geschoben werden. Erst dann können der Außen- und Innenrahmen miteinander verbunden und beide gegeneinander verspannt werden. Im Gegensatz zu dem vorangehenden Ausführungsbeispiel ist es also nicht möglich, einen einzelnen Riegel nachträglich auszuwechseln, wenn die übrigen Riegel sich bereits in der Verriegelungsposition befinden.

Bei der dritten Ausführungsform, gemäß Fig. 15, wird der Riegel 9 im Bereich des Sperrgliedes 18 am Außenrahmen 6 geführt. Die Verriegelungsdruckflächen 105′ und 109′ befinden sich (wie bei der Ausführungsform gemäß Fig. 4) wiederum am Innenrahmen und den damit korrespondierenden am Riegel 9 auskragend angeordneten Abstützelementen 119 des Riegels 9. Bei diesem Ausführungsbeispiel befindet sich der Einfädelbereich DD (in ähnlicher Weise wie bei der ersten Ausführungsform dieser Art gemäß Fig. 12a bis 13c) bezüglich der Verriegelungsposition BB am Anfang des Verschiebeweges. In der in Fig. 15 dargestellten Position des Riegels 9 befindet sich dieser bereits im Eingriff mit dem Sperrglied 18, welches sich aufgrund der Explosionsdarstellung allerdings oberhalb des Sperrgliedes 9 befindet. Die tatsächliche Position des Sperrgliedes 18 ist gestrichelt angedeutet. In der dargestellten, als Fixierposition EE bezeichneten Position des Sperriegels 9 überträgt dieser noch keine, jedenfalls aber nicht die vollen Klemmkräfte, so daß ein Zurechtrücken des Deckelrahmens in die letztendlich gewünschte Position sowie eine Kontrolle des Sitzes der Rahmendichtung noch möglich ist. In diesem Fall werden der Außen- und Innenrahmen zunächst lose zusammengefügt und an zwei oder mehreren Stellen je ein Sperrglied im Einfädelbereich DD eingefädelt und in die Fixierposition EE verschoben.

Die vierte Ausführungsform dieser Art, gemäß Fig. 16, unterscheidet sich von der dritten Ausführungsform, gemäß Fig. 15, lediglich dadurch, daß das Sperrglied 18 und die Sperrgliedaufnahme 117 zusätzlich die Funktion des Verkeilens ausüben und entsprechend geneigte Verriegelungsdruckflächen 106′ und 109′ aufweisen.

Aus Fig. 17a ist ersichtlich, wie mittels einer Schubstange 111 mehrere Riegel 9 gleichzeitig in die (dort dargestellte) Verriegelungsposition verschiebbar sind. Die hierfür erforderliche Verschiebekraft wird besonders günstig dadurch aufgebracht, daß an der Schubstange 111 zwei Schubstangenglieder 111A und 111B hintereinander gelenkig angeordnet sind, wobei das von der Schubstange 111 entfernte Schubstangenglied 111B bezüglich des Innenrahmens 5 schwenkbar gelagert ist. In der in Fig. 17a dargestellten Strecklage der beiden Schubstangenglieder 111A und 111B sind die Riegel 9 unverrückbar festgelegt, und zwar ähnlich wie bei einer Verrastung in dieser Position.

In der in Fig. 17b dargestellten Startposition der Schubstange 111 sind die beiden Schubstangenglieder 111A und 111B in einer abgewinkelten Lage zueinander orientiert. Übt man nun auf das Griffelement 10 eine zur Strecklage hin orientierte Druckkraft aus, so verschiebt sich die Schubstange 111 zunehmend in die Verriegelungsposition, wobei sie am Übergang zu dem Schubstangenglied 111A mittels paarweise angeordneten Zapfen 120 in entsprechend paarweise vorgesehenen und entsprechend angeordneten und geformten Führungsnuten 121 im Innenrahmen 5 geführt ist. Diese Anordnung hat den Vorteil einer zunehmenden Kraftverstärkung je näher die Schubstangenglieder 111A und 111B an ihre Strecklage herangeführt werden.

Einer der Schubstange 111 im Prinzip entsprechende Anordnung ist aus der DE-A-33 29 407 bekannt. Diese bekannte Anordnung dient aber, im Gegensatz zur Erfindung, zum häufigen Lösen und Verriegeln eines Harttops, wobei die Verriegelung nicht mit Keilflächen erfolgt.

**Bezugszeichenliste**

| | |
|---|---|
| 1 | Sonnendach |
| 2 | Dachhaut (Fahrzeugaufbau) |
| 2′ | Öffnungsrand |
| 3 | Deckelrahmen |
| 3′ | Eckbereich |
| 3″ | Rahmenstrebe |
| 4 | Deckel |
| 5 | Innenrahmen (erster Rahmen) |
| 6 | Außenrahmen (zweiter Rahmen) |
| 7 | Klemmvorrichtung |
| 8 | Durchbrechung |
| 9 | Riegel |
| 9A | Teilriegel |
| 9B | Teilriegel |
| 9′ | Arm |
| 10 | Griffstück |
| 11 | Schwenkachse |
| 12 | Vertiefung |
| 13 | Eingriffmulde |
| 14 | Schlitz |
| 15 | Lagerfläche = Lagerorgan |
| 15′ | Lagerbock |
| 16 | Oberflläche |
| 18 | Sperrglied |
| 18′ | Gleitfläche |
| 18″ | Gleitfläche |
| 19 | Rastnocken |
| 21 | Schwenklagerzapfen = Lagerorgan |
| 23 | Formschlußelement |
| 24 | Formschlußelement |
| 25 | Verbindungsstrebe |
| 26 | Horizontalfläche |
| 27 | Zunge |
| 28 | Führungsnut (Kulissenaufnahme) = Lagerorgan |
| 29 | Führungssteg (Zapfen) = Lagerorgan |
| 105′ | Verriegelungsdruckfläche = Lagerorgan |
| 105″ | Kragflansch |

EP 0 400 069 B1

| | | |
|---|---|---|
| 106′ | Verriegelungsdruckfläche | |
| 106" | Kragflansch | |
| 109′ | Verriegelungsdruckfläche | |
| 111 | Schubstange | |
| 111A | Schubstangenglied | |
| 111B | Schubstangenglied | |
| 113 | Führungselement (rahmenseitig) = Lagerorgan | |
| 114 | Führungselement (riegelseitig) = Lagerorgan | |
| 115 | Deckeldichtung | |
| 116 | Rahmendichtung | |
| 117 | Sperrgliedaufnahme | |
| 119 | Abstützelement = Lagerorgan | |
| 120 | Zapfen | |
| 121 | Führungsnuten | |
| A | Ansicht von unten | |
| B | Ansicht von unten | |
| C | Ansicht von der Seite | |
| D | Ansicht von unten | |
| F | Ansicht von vorne | |
| G | Ansicht von oben | |
| H | Ansicht von hinten | |
| K | Ansicht von unten | |
| AA | Verschieberichtung | |
| BB | Verriegelungsposition | |
| CC | Startposition | |
| DD | Einfädelbereich | |
| EE | Fixierposition | |

**Patentansprüche**

1. Sonnendach für Fahrzeuge mit einem einen Deckelrahmen (3) bildenden ersten und zweiten Rahmen (5, 6) und einem öffen- und schließbaren Deckel (4), bei dem der Deckelrahmen (3) durch Einklemmen der Dachhaut (2) im Bereich des Öffnungsrandes (2′) zwischen dem ersten und zweiten Rahmen (5 und 6) am Fahrzeugaufbau festlegbar ist und bei dem auf dem Umfang des Deckelrahmens (3) verteilt angeordnete Klemmvorrichtungen (7) die Aufrechterhaltung der erforderlichen Klemmkräfte zwischen dem ersten und zweiten Rahmen (5 und 6) ermöglichen, bei dem

   a) jede Klemmvorrichtung aus zumindest einem dreh- oder verschieb- oder schwenkbaren Riegel (9) und aus zumindest einem von dem Riegel (9) hintergreifbaren Sperrglied (18) besteht,

   b) die Riegel (9) an dem ersten oder zweiten Rahmen (5 oder 6) dreh- oder verschieb- oder schwenkbar abgestützt bzw. gelagert oder lagerbar sind und die Sperrglieder (18) an dem jeweils anderen Rahmen (6 oder 5) angeordnet und befestigt oder befestigbar sind,

   c) die Riegel (9) beim Drehen oder Verschieben oder Verschwenken in die Verriegelungsposition (BB) an den ihnen zugehörigen Sperrgliedern (18) derart zur Anlage kommen, daß sie die erforderlichen Klemmkräfte zwischen dem ersten und dem zweiten Rahmen (5 und 6) aufbauen und danach aufrechterhalten und

   d) die Riegel (9) im Bereich ihrer Kontaktflächen mit den Sperrgliedern in Bewegungsrichtung konkav gekrümmt sind.

2. Sonnendach für Fahrzeuge mit einem einen Deckelrahmen (3) bildenden ersten und zweiten Rahmen (5, 6) und einem öffen- und schließbaren Deckel (4), bei dem der Deckelrahmen (3) durch Einklemmen der Dachhaut (2) im Bereich des Öffnungsrandes (2′) zwischen dem ersten und zweiten Rahmen (5 und 6) am Fahrzeugaufbau festlegbar ist und bei dem auf dem Umfang des Deckelrahmens (3) verteilt angeordnete Klemmvorrichtungen (7) die Aufrechterhaltung der erforderlichen Klemmkräfte zwischen dem ersten und zweiten Rahmen (5 und 6) ermöglichen, bei dem

   a) jede Klemmvorrichtung aus zumindest einem dreh- oder verschieb- oder schwenkbaren Riegel (9) und aus zumindest einem von dem Riegel (9) hintergreifbaren Sperrglied (18) besteht,

   b) die Riegel (9) an dem ersten oder zweiten Rahmen (5 oder 6) dreh- oder verschieb- oder schwenkbar

11

abgestützt bzw. gelagert oder lagerbar sind und die Sperrglieder (18) an dem jeweils anderen Rahmen (6 oder 5) angeordnet und befestigt oder befestigbar sind,

c) die Riegel (9) beim Drehen oder Verschieben oder Verschwenken in die Verriegelungsposition (BB) an den ihnen zugehörigen Sperrgliedern (18) derart zur Anlage kommen, daß sie die erforderlichen Klemmkräfte zwischen dem ersten und dem zweiten Rahmen (5 und 6) aufbauen und danach aufrechterhalten,

d) jeder Klemmvorrichtung (7; 9, 18) eine Durchbrechung (8) oder Ausnehmung im ersten oder zweiten Rahmen (5 oder 6) derart zugeordnet ist, daß der Riegel (9) zumindest zum Erreichen der Verriegelungsposition (BB) in die Durchbrechung (8) oder in die Ausnehmung derart eingreift, daß er dabei zur Anlage an dem Sperrglied (18) gelangt und

e) korrespondierende Lagerorgane für die Riegel (9) an den Riegeln selbst und an dem ersten oder zweiten Rahmen (5 oder 6) vorgesehen sind und die Durchbrechungen (8) an dem die Lagerorgane tragenden zweiten oder ersten Rahmen (6 oder 5) angeordnet sind.

3. Sonnendach für Fahrzeuge mit einem einen Deckelrahmen (3) bildenden ersten und zweiten Rahmen (5, 6) und einem öffen- und schließbaren Deckel (4), bei dem der Deckelrahmen (3) durch Einklemmen der Dachhaut (2) im Bereich des Öffnungsrandes (2') zwischen dem ersten und zweiten Rahmen (5 und 6) am Fahrzeugaufbau festlegbar ist und bei dem auf dem Umfang des Deckelrahmens (3) verteilt angeordnete Klemmvorrichtungen (7) die Aufrechterhaltung der erforderlichen Klemmkräfte zwischen dem ersten und zweiten Rahmen (5 und 6) ermöglichen, bei dem

a) jede Klemmvorrichtung aus zumindest einem dreh- oder verschieb- oder schwenkbaren Riegel (9) und aus zumindest einem von dem Riegel (9) hintergreifbaren Sperrglied (18) besteht,

b) die Riegel (9) an dem ersten oder zweiten Rahmen (5 oder 6) dreh- oder verschieb- oder schwenkbar abgestützt bzw. gelagert oder lagerbar sind und die Sperrglieder (18) an dem jeweils anderen Rahmen (6 oder 5) angeordnet und befestigt oder befestigbar sind,

c) die Riegel (9) beim Drehen oder Verschieben oder Verschwenken in die Verriegelungsposition (BB) an den ihnen zugehörigen Sperrgliedern (18) derart zur Anlage kommen, daß sie die erforderlichen Klemmkräfte zwischen dem ersten und dem zweiten Rahmen (5 und 6) aufbauen und danach aufrechterhalten,

d) die Riegel (9) einerseits und zumindest der erste oder zweite Rahmen (5 oder 6) andererseits bezüglich der Verschieberichtung (AA) der Riegel paarweise keilförmig orientierte korrespondierende Verriegelungsdruckflächen (109' und 105', 106') aufweisen und

e) die Riegel (9) Sperrgliedaufnahmen (17) aufweisen, die beim Verschieben in die Verriegelungsposition (BB) an den ihren zugehörigen Sperrgliedern (18) derart zur Anlage kommen, daß sie die erforderlichen Klemmkräft zwischen dem ersten und dem zweiten Rahmen (5 und 6) ausüben.

4. Sonnendach für Fahrzeuge mit einem einen Deckelrahmen (3) bildenden ersten und zweiten Rahmen (5, 6) und einem öffen- und schließbaren Deckel (4), bei dem der Deckelrahmen (3) durch Einklemmen der Dachhaut (2) im Bereich des Öffnungsrandes (2') zwischen dem ersten und zweiten Rahmen (5 und 6) am Fahrzeugaufbau festlegbar ist und bei dem auf dem Umfang des Deckelrahmens (3) verteilt angeordnete Klemmvorrichtungen (7) die Aufrechterhaltung der erforderlichen Klemmkräfte zwischen dem ersten und zweiten Rahmen (5 und 6) ermöglichen, bei dem

a) jede Klemmvorrichtung aus zumindest einem dreh- oder verschiebbaren Riegel (9) und aus zumindest einem von dem Riegel (9) hintergreifbaren Sperrglied (18) besteht,

b) die Riegel (9) an dem ersten zweiten Rahmen (5 oder 6) dreh- oder verschiebbar abgestützt bzw. gelagert oder lagerbar sind und die Sperrglieder (18) an dem jeweils anderen Rahmen (6 oder 5) angeordnet und befestig oder befestigbar sind und

c) die Riegel (9) beim Drehen oder Verschieben in die Verriegelungsposition (BB) an den ihnen zugehörigen Sperrgliedern (18) zur Anlage kommen, wobei die erforderlichen Klemmkräfte zwischen dem ersten und dem zweiten Rahmen (5 oder 6) mittels der Riegel (9) bei ihrem Drehen oder Verschieben aufgebaut und danach aufrechterhalten werden.

5. Sonnendach nach Anspruch 1, 3 oder 4, dadurch gekennzeichnet, daß jeder Klemmvorrichtung (7; 9, 18) eine Durchbrechung (8) oder Ausnehmung im ersten oder zweiten Rahmen (5 oder 6) derart zugeordnet ist, daß der Riegel (9) zumindest zum Erreichen der Verriegelungsposition (BB) in die Durchbrechung (8) oder in die Ausnehmung derart eingreift, daß er dabei zur Anlage an dem Sperrglied (18) gelangt.

6. Sonnendach nach Anspruch 5, dadurch gekennzeichnet, daß korrespondierende Lagerorgane für die Riegel (9) an den Riegeln selbst und an dem ersten oder zweiten Rahmen (5 oder 6) vorgesehen sind und die Durchbrechungen (8) an dem die Lagerorgane oder an dem die Sperrglieder (18) tragenden zweiten oder ersten Rahmen (6 oder 5) angeordnet sind.

7. Sonnendach nach einem der Ansprüche 1 bis 6, gekennzeichnet durch ein das Herausfallen des Riegels (9) aus dem ersten oder zweiten Rahmen zumindest in der noch nicht verriegelten Position des Riegels verhinderndes Sicherungselement (Zunge (27)).

8. Sonnendach nach einem der Ansprüche 1 bis 7, dadurch gekennzeichnet, daß die Lagerorgane (Schwenklager (28, 29)) an beiden Außenseiten des Riegels (9) angeordnet sind.

9. Sonnendach nach Anspruch 8, dadurch gekennzeichnet, daß die Lagerorgane aus gebogenen Kulissenaufnahmen (28) und darin eingreifenden Zapfen (29) bestehen.

10. Sonnendach nach einem der Ansprüche 1 bis 9, dadurch gekennzeichnet, daß die Riegel (9) aus je zwei Teilriegeln (9A und 9B) bestehen und die Teilriegel Laderorgane (Dreh- oder Schwenklager (15, 21)) für den Riegel (9) zwischen sich einschließen.

11. Sonnendach nach einem der Ansprüche 2 bis 10, dadurch gekennzeichnet, daß die Riegel (9) im Bereich ihrer Kontaktflächen mit den Sperrgliedern in Bewegungsrichtung konkav gekrümmt sind.

12. Sonnendach nach einem der Ansprüche 1, 2 oder 4 bis 11,
dadurch gekennzeichnet, daß
die Riegel (9) einerseits und zumindest der erste oder zweite Rahmen (5 oder 6) andererseits bezüglich der Verschieberichtung (AA) der Riegel (9) paarweise keilförmig orientierte korrespondierende Verriegelungsdruckflächen (109′ und 105′, 106′) aufweisen und
die Riegel (9) Sperrgliedaufnahmen (17) aufweisen, die beim Verschieben in die Verriegelungsposition (BB) an den ihnen zugehörigen Sperrgliedern (18) derart zum Anlage kommen, daß sie die erforderlichen Klemmkräfte zwischen dem ersten und dem zweiten Rahmen (5 und 6) ausüben.

13. Sonnendach nach Anspruch 12, gekennzeichnet durch eine mehrere Riegel (9) gemeinsam verschiebende Schubstange (111).

14. Sonnendach nach Anspruch 13, dadurch gekennzeichnet, daß die Schubstange (111) zumindest ein quer zur Verschieberichtung (AA) bewehbares und zum Verschieben in die Verriegelungsposition (BB) in eine etwa parallel zur Schubstange (111) orientierte Strecklage bringbares Schubstangenglied (111A, 111B) aufweist.

15. Sonnendach nach einem der Ansprüche 1 bis 14, dadurch gekennzeichnet, daß ein Griffsstück (10) zum Angreifen der Betätigungskraft mit dem Riegel (9) verbindbar oder dauerhaft verbunden ist.

16. Sonnendach nach einem der Ansprüche 1 bis 15, dadurch gekennzeichnet, daß die Riegel (9) und/oder die Griffelemente (10) in der Verriegelungsposition (BB) arretierbar, insbesondere verrastbar sind.

17. Sonnendach nach einem der Ansprüche 1 bis 16, dadurch gekennzeichnet, daß die Klemmvorrichtungen (7), die Riegel (9) oder der erste oder zweite Rahmen (5 oder 6) vor dem Verstellen der Riegel (9) in die Verriegelungsposition (BB) in eine Fixierposition (EE) bringbar sind.

18. Sonnendach nach einem der Ansprüche 1 bis 17, dadurch gekennzeichnet, daß die Riegel (9) und/oder die Griffstücke (10) zumindest in der Verriegelungsposition (BB) vollständig innerhalb des Deckelrahmenquerschnittes eintauchen.

19. Sonnendach nach einem der Ansprüche 1 bis 18, dadurch gekennzeichnet, daß die Klemmvorrichtung zumindest teilweise aus Kunststoffteilen besteht.

## Claims

1. A sun roof for vehicles with a first and second frame (5, 6), forming a cover frame (3), and an openable and closeable cover (4), wherein the cover frame (3) can be fastened to the vehicle body by clamping the roofing (2) in the region of the opening edge (2') between the first and second frame (5 and 6) and wherein clamping devices (7), distributed along the periphery of the cover frame (3), allow the necessary clamping forces to be maintained between the first and second frame (5 and 6), wherein

a) each clamping device consists of at least one rotatable, displaceable or swivellable bar (9) and of at least one stopping element (18), behind which the bar (9) can engage,

b) the bars (9) are supported or mounted/mountable on the first or second frame (5 or 6) so as to be rotatable, displaceable or swivellable and the stopping elements (18) are arranged and fastened/fastenable on the respective other frame (6 or 5),

c) when the bars (9) are rotated, displaced or swivelled into the locking position (BB), they come to rest against their associated stopping elements (18) in such a manner that they build up and subsequently maintain the necessary clamping forces between the first and second frame (5 and 6), and

d) the bars (9) are curved in a concave manner in the direction of motion in its areas of contact with the stopping elements.

2. A sun roof for vehicles with a first and second frame (5, 6), forming a cover frame (3), and an openable and closeable cover (4), wherein the cover frame (3) can be fastened to the vehicle body by clamping the roofing (2) in the region of the opening edge (2') between the first and second frame (5 and 6) and wherein clamping devices (7), distributed along the periphery of the cover frame (3), allow the necessary clamping forces to be maintained between the first and second frame (5 and 6), wherein

a) each clamping device consists of at least one rotatable, displaceable or swivellable bar (9) and of at least one stopping element (18), behind which the bar (9) can engage,

b) the bars (9) are supported or mounted/mountable on the first or second frame (5 or 6) so as to be rotatable, displaceable or swivellable and the stopping elements (18) are arranged and fastened/fastenable on the respective other frame (6 or 5),

c) when the bars (9) are rotated, displaced or swivelled into the locking position (BB), they come to rest against their associated stopping elements (18) in such a manner that they build up and subsequently maintain the necessary clamping forces between the first and second frame (5 and 6),

d) each clamping device (7; 9, 18) is assigned an opening (8) or recess in the first or second frame (5 or 6), in such a manner that the bar (9) engages in the opening (8) or in the recess, at least in order to reach the locking position (BB), and in doing so comes to rest against the stopping element (18), and

e) corresponding bearing members for the bars (9) are provided on the bars themselves and on the first or second frame (5 or 6), and the openings (8) are arranged on the second or first frame (6 or 5) carrying the bearing members.

3. A sun roof for vehicles with a first and second frame (5, 6), forming a cover frame (3), and an openable and closeable cover (4), wherein the cover frame (3) can be fastened to the vehicle body by clamping the roofing (2) in the region of the opening edge (2') between the first and second frame (5 and 6) and wherein clamping devices (7), distributed along the periphery of the cover frame (3), allow the necessary clamping forces to be maintained between the first and second frame (5 and 6), wherein

a) each clamping device consists of at least one rotatable, displaceable or swivellable bar (9) and of at least one stopping element (18), behind which the bar (9) can engage,

b) the bars (9) are supported or mounted/mountable on the first or second frame (5 or 6) so as to be rotatable, displaceable or swivellable and the stopping elements (18) are arranged and fastened/fastenable on the respective other frame (6 or 5),

c) when the bars (9) are rotated, displaced or swivelled into the locking position (BB), they come to rest against their associated stopping elements (18) in such a manner that they build up and subsequently maintain the necessary clamping forces between the first and second frame (5 and 6),

d) the bars (9) on the one hand and at least the first or second frame (5 or 6) on the other have corresponding pressure surfaces (109' and 105', 106') for locking, which are oriented in pairs in a wedge-shaped manner relative to the direction of displacement (AA) of the bars (9) and

e) the bars (9) have stopping-element receivers (17) which, when they are displaced into the locking position (BB), come to rest against their associated stopping elements (18) in such a manner that they exert the necessary clamping forces between the first and the second frame (5 and 6).

4. A sun roof for vehicles with a first and second frame (5, 6), forming a cover frame (3), and an openable and closeable cover (4), wherein the cover frame (3) can be fastened to the vehicle body by clamping the roofing (2) in the region of the opening edge (2') between the first and second frame (5 and 6) and wherein clamping devices (7), distributed along the periphery of the cover frame (3), allow the necessary clamping forces to be maintained between the first and second frame (5 and 6), wherein

a) each clamping device consists of at least one rotatable or displaceable bar (9) and of at least one stopping element (18), behind which the bar (9) can engage,

b) the bars (9) are supported or mounted/mountable on the first or second frame (5 or 6) so as to be rotatable or displaceable and the stopping elements (18) are arranged and fastened/fastenable on the respective other frame (6 or 5), and,

c) when the bars (9) are rotated or displaced into the locking position (BB), they come to rest against their associated stopping elements (18), the necessary clamping forces between the first and the second frame (5 and 6) being built up by means of the bars (9) during their rotation or displacement, and subsequently maintained by these bars (9).

5. A sun roof according to Claims 1, 3 or 4, characterised in that each clamping device (7; 9, 18) is assigned an opening (8) or recess in the first or second frame (5 or 6), in such a manner that the bar (9) engages in the opening (8) or in the recess, at least in order to reach the locking position (BB), and in doing so comes to rest against the stopping element (18).

6. A sun roof according to Claim 5, characterised in that corresponding bearing members for the bars (9) are provided on the.bars themselves and on the first or second frame (5 or 6), and the openings (8) are arranged on the second or first frame (6 or 5) carrying the bearing members or the stopping elements (18).

7. A sun roof according to any one of Claims 1 to 6, characterised by a securing element (tongue (27)) which prevents the bar (9) from falling out of the first or second frame, at least when the bar is not yet in the locked position.

8. A sun roof according to any one of Claims 1 to 7, characterised in that the bearing members (swivel bearings (28, 29)) are arranged on both outer sides of the bar (9).

9. A sun roof according to Claim 8, characterised in that the bearing members consist of curved crank receivers (28) and journals (29) engaging therein.

10. A sun roof according to any one of Claims 1 to 9, characterised in that the bars (9) each consist of two partial bars (9A and 9B) and the partial bars enclose bearing members (pivot bearings or swivel bearings (15, 21)) for the bar (9) between them.

11. A sun roof according to any one of Claims 2 to 10, characterised in that the bars (9) are curved in a concave manner in the direction of motion in its areas of contact with the stopping elements.

12. A sun roof according to any one of Claims 1, 2 or 4 to 11, characterised in that the bars (9) on the one hand and at least the first or second frame (5 or 6) on the other have corresponding pressure surfaces (109′ and 105′, 106′) for locking, which are oriented in pairs in a wedge-shaped manner relative to the direction of displacement (AA) of the bars (9) and
the bars (9) have stopping-element receivers (17) which, when they are displaced into the locking position (BB), come to rest against their associated stopping elements (18) in such a manner that they exert the necessary clamping forces between the first and the second frame (5 and 6).

13. A sun roof according to Claim 12, characterised by a thrust rod (111) displacing several bars (9) together.

14. A sun roof according to Claim 13, characterised in that the thrust rod (111) has at least one thrust-rod element (111A, 111B) which can be moved transversely to the direction of displacement (AA) and which, for the purpose of displacement into the locking position (BB), can be brought into an extended position oriented roughly parallel to the thrust rod (111).

15. A sun roof according to any one of Claims 1 to 14, characterised in that a handle (10) is connectable or permanently connected to the bar (9) for the purpose of applying the operating force.

16. A sun roof according to any one of Claims 1 to 15, characterised in that the bars (9) and/or the handle elements (10) can be arrested, in particular latched, in the locking position (BB).

17. A sun roof according to any one of Claims 1 to 16, characterised in that the clamping devices (7), the bars (9) or the first or second frame (5 or 6) can be brought into a fixing position (EE) before the bars (9) are shifted into the locking position (BB).

18. A sun roof according to any one of Claims 1 to 17, characterised in that the bars (9) and/or the handles (10) are completely submerged within the cross-section of the cover frame, at least in the locking position (BB).

19. A sun roof according to any one of Claims 1 to 18, characterised in that the clamping device consists at least partially of plastic parts.

**Revendications**

1. Toit ouvrant pour véhicules comprenant un premier et un deuxième cadre (5, 6) formant un chassis de fermeture (3) et un panneau de fermeture (4) ouvrant et fermant, dans lequel le châssis de fermeture (3) peut être fixé à la carrosserie du véhicule entre le premier cadre et le deuxième cadre (5 et 6) dans la zone du bord d'ouverture (2') par serrage de la tôle de pavillon (2) et dans lequel sont répartis, sur le périmètre du châssis de fermeture (3), des dispositifs de serrage (7) permettant le maintien des forces de serrage nécessaires entre le premier et le deuxième cadre (5 et 6), dans lequel:
   a) chaque dispositif de serrage se compose d'au moins un verrou (9) pivotant, coulissant ou rotatif et d'au moins un organe d'arrêt (18) agrippé par l'arrière par le verrou (9),
   b) les verrous (9) sont logés ou logeables ou prennent appui de manière rotative, coulissante ou pivotante sur le premier ou deuxième cadre (5 ou 6) et les organes d'arrêt (18) sont disposés et fixés ou fixables sur l'autre cadre (6 ou 5),
   c) les verrous (9), lors de la rotation, du coulissement ou du pivotement dans la position de verrouillage (BB) viennent s'enclencher dans leurs organes d'arrêt respectifs (18), de manière à générer les forces de serrage nécessaires entre le premier et le deuxième cadre (5 et 6) et à les maintenir, et
   d) les verrous (9) ont une courbure concave dans le sens du mouvement dans la région de leurs surfaces de contact avec les organes d'arrêt.

2. Toit ouvrant pour véhicules comprenant un premier et un deuxième cadre (5, 6) formant un châssis de fermeture (3) et un panneau de fermeture (4) ouvrant et fermant, selon lequel le châssis de fermeture (3) peut être fixé à la carrosserie du véhicule entre le premier cadre et le deuxième cadre (5 et 6) dans la zone du bord d'ouverture (2') par serrage de la tôle de pavillon (2) et dans lequel sont répartis, sur le périmètre du chassis de fermeture (3), des dispositifs de serrage (7) permettant le maintien des forces de serrage nécessaires entre le premier et le deuxième cadre (5 et 6), dans lequel:
   a) chaque dispositif de serrage se compose d'au moins un verrou (9) pivotant, coulissant ou rotatif et d'au moins un organe d'arrêt (118) agrippé par l'arrière par le verrou (9),
   b) les verrous (9) sont logés ou logeables ou prennent appui de manière rotative, coulissante ou pivotante sur le premier ou deuxième cadre (5 ou 6) et les organes d'arrêt (18) sont disposés et fixés ou fixables sur l'autre cadre (6 ou 5),
   c) les verrous (9), lors de la rotation, du coulissement ou du pivotement dans la position de verrouillage (BB) viennent s'enclencher dans leurs organes d'arrêt respectifs (18), de manière à générer les forces de serrage nécessaires entre le premier et le deuxième cadre (5 et 6) et à les maintenir,
   d) à chaque dispositif de serrage (7, 9, 18) une découpe (8) ou évidement est prévu dans le premier ou deuxième cadre (5 ou 6) de manière que le verrou (9) puisse au moins atteindre la position de verrouillage (BB) en pénétrant dans la découpe (8) ou l'évidement de manière qu'il atteigne alors l'organe d'arrêt (18) et
   e) les éléments de garniture correspondants sont prévus pour les verrous (9) sur le premier ou le deuxième cadre (5 ou 6) et même sur les verrous et les découpes (8) sont prévues sur le premier ou le deuxième cadre (6 ou 5) portant les éléments de garniture.

3. Toit ouvrant pour véhicules comprenant un premier et un deuxième cadre (5, 6) formant un châssis de fermeture (3) et un panneau de fermeture (4) ouvrant et fermant, dans lequel le châssis de fermeture (3) peut être fixé à la carrosserie du véhicule entre le premier cadre et le deuxième cadre (5 et 6) dans la zone du bord d'ouverture (2') par serrage de la tôle de pavillon (2) et dans lequel sont répartis, sur le périmètre du châssis de fermeture (3), des dispositifs de serrage (7) permettant le maintien des forces de serrage nécessaires entre le premier et le deuxième cadre (5 et 6), dans lequel :

a) chaque dispositif de serrage se compose d'au moins un verrou (9) pivotant, coulissant ou rotatif et d'au moins un organe d'arrêt (18) agrippé par l'arrière par le verrou (9),

b) les verrous (9) sont logés ou logeables ou prennent appui de manière rotative, coulissante ou pivotante sur le premier ou deuxième cadre (5 ou 6) et les organes d'arrêt (18) sont disposés et fixés ou fixables sur l'autre cadre (6 ou 5),

c) les verrous (9), lors de la rotation, du coulissement ou du pivotement dans la position de verrouillage (BB) viennent s'enclencher dans leurs organes d'arrêt respectifs (18), de manière à générer les forces de serrage nécessaires entre le premier et le deuxième cadre (5 et 6) et à les maintenir,

d) les verrous (9), d'une part, et au moins le premier ou deuxième cadre (5 ou 6), d'autre part, se référant au sens de déplacement (AA) des verrous (9) présentent des surfaces de pression de verrouillage (109′ et 105′, 106′) correspondant à l'orientation par paire cunéiforme et

e) les verrous (9) présentent des entraînements (17) d'organes d'arrêt, qui au déplacement en position de verrouillage (BB) atteignent leurs organes d'arrêt respectifs (18), de manière à exercer les forces de serrage nécessaires entre le premier et le deuxième cadre (5 et 6).

4. Toit ouvrant pour véhicules comprenant un premier et un deuxième cadre (5, 6) formant un châssis de fermeture (3) et un panneau de fermeture (4) ouvrant et fermant, selon lequel le cadre de fermeture (3) peut être fixé à la carrosserie du véhicule entre le premier cadre et le deuxième cadre (5 et 6) dans la zone du bord d'ouverture (2′) par serrage de la tôle de pavillon (2) et dans lequel sont répartis, sur le périmètre du chassis de fermeture (3), des dispositifs de serrage (7) permettant le maintien des forces de serrage nécessaires entre le premier et le deuxième cadre (5 et 6), dans lequel:

a) chaque dispositif de serrage se compose d'au moins un verrou (9) coulissant ou rotatif et d'au moins un organe d'arrêt (18) agrippé par l'arrière par le verrou (9),

b) les verrous (9) sont logés ou logeables ou prennent appui de manière rotative, ou coulissante sur le premier ou deuxième cadre (5 ou 6) et les organes d'arrêt (18) sont disposés et fixés ou fixables sur l'autre cadre (6 ou 5) et,

c) les verrous (9), lors de la rotation ou du coulissement dans la position de verrouillage (BB) viennent s'enclencher dans leurs organes d'arrêt respectifs (18), les forces de serrage nécessaires entre le premier et le deuxième cadre (5 et 6) sont alors générées au moyen des verrous (9) lors de leur rotation ou de leur coulissement et sont ensuite maintenues.

5. Toit ouvrant selon l'une dès revendications 1, 3 ou 4 caractérisé en ce qu'à chaque système de serrage (7, 9, 18) une découpe (8) ou un évidement est prévu dans le premier ou deuxième cadre (5 ou 6) de manière que le verrou (9) au moins, pour atteindre la position de verrouillage (BB), pénètre dans la découpe (8) ou dans l'évidement de sorte qu'il atteigne alors l'organe de serrage (18).

6. Toit ouvrant selon la revendication 5, caractérisé en ce que des éléments de garniture correspondants sont prévus pour les verrous (9) sur les verrous eux-mêmes et sur le premier ou le deuxième cadre (5 ou 6) et en ce que les découpes (8) sont prévues sur le premier ou le deuxième cadre (6 ou 5) portant les éléments de garniture ou sur les organes de serrage (18).

7. Toit ouvrant selon l'une des revendications 1 à 6, caractérisé par un élément de sécurité (languette (27)) empêchant le verrou (9) de tomber du premier ou deuxième cadre au moins dans la position encore non verrouillée du verrou.

8. Toit ouvrant selon l'une des revendications 1 à 7, caractérisé en ce que les éléments de garniture (paliers pivotants (28, 29)) sont disposés sur les deux faces extérieures du verrou (9).

9. Toit ouvrant selon la revendication 8, caractérisé en ce que les éléments de garniture se composent d'entraînements coulissants courbés (28) et consistent en des tenons (29) y pénétrant.

10. Toit ouvrant selon l'une des revendications 1 à 9, caractérisé en ce que les verrous (9) se composent chacun de deux verrous partiels (9A et 9B) et les verrous partiels englobent entre eux des éléments de garniture (paliers rotatifs ou pivotants (15, 21)) pour le verrou (9).

11. Toit ouvrant selon l'une des revendications 2 à 10, caractérisé en ce que les verrous (9) dans la région de leurs surfaces de contact avec les organes de serrage ont une courbure concave dans le sens du mouvement.

**12.** Toit ouvrant selon l'une des revendications 1, 2 ou 4 à 11, caractérisé en ce que les verrous (9), d'une part, et au moins le premier ou deuxième cadre (5 ou 6), d'autre part, se référant au sens de déplacement (AA) des verrous (9) présentent des surfaces de pression de verrouillage (109' et 105', 106') correspondant à l'orientation par paire cunéiforme, et en ce que

les verrous (9) présentent des entraînements (17) d'organes d'arrêt qui, au déplacement en position de verrouillage (BB), atteignent leurs organes d'arrêt respectifs (18), de manière à exercer les forces de serrage nécessaires entre le premier et le deuxième cadre (5 et 6).

**13.** Toit ouvrant selon la revendication 12, caractérisé par une barre (111) coulissant ensemble avec plusieurs verrous (9).

**14.** Toit ouvrant selon la revendication 13, caractérisé en ce que la barre coulissante (111) présente au moins un organe (111A, 111B) de barre coulissante mobile transversalement par rapport au sens de déplacement (AA) et venant en position étirée parallèlement à la barre coulissante (111) pour le déplacement en position de verrouillage (BB).

**15.** Toit ouvrant selon l'une des revendications 1 à 14, caractérisé en ce qu'une poignée (10) pour l'application de la force d'actionnement peut être connectée au verrou (9) ou y être reliée durablement.

**16.** Toit ouvrant selon l'une des revendications 1 à 15, caractérisé en ce que les verrous (9) et/ou les éléments de poignée (10) sont bloqués en position de verrouillage (BB), notamment ils sont enclenchables.

**17.** Toit ouvrant selon l'une des revendications 1 à 16, caractérisé en ce que les dispositifs de serrage (7), les verrous (9) ou le premier ou le deuxième cadre (5 ou 6) avant le réglage des verrous (9) en position de verrouillage (BB) peuvent être amenés dans une position de fixation (EE).

**18.** Toit ouvrant selon l'une des revendications 1 à 17, caractérisé en ce que les verrous (9), et/ou les poignées (10) au moins dans la position de verrouillage (BB) peuvent pénétrer complètement dans des coupes transversales du châssis de fermeture.

**19.** Toit ouvrant selon l'une des revendications 1 à 18, caractérisé en ce que les dispositifs de serrage, au moins partiellement, sont composés de pièces en matière plastique.

Fig. 1b

5

8 23 27 8

Fig. 1 d

Fig. 1 c

Fig. 1 f

G

F

24

18

6

Fig. 1 e

H

Fig. 1 g

Fig. 1 h

Fig. 2b

Fig. 2a

Fig. 3a

Fig. 3b

Fig. 3c

Fig.4 c

Fig. 4a

Fig. 4b

Fig. 5a

18

9

Fig. 5b

9

18

Fig. 5c

18

9

Fig. 5d

18

9

Fig. 5e

18

9

EP 0 400 069 B1

Fig. 6a

Fig. 6b

Fig. 6c

Fig. 7a

Fig. 7b

Fig. 7c

Fig. 8 a

Fig. 8 b

Fig. 9 a

Fig. 9 b

Fig. 10 a

Fig. 10 b

Fig. 11a

Fig. 11b

Fig. 11c

## Fig. 12 a

## Fig.12 b

Fig.13a

Fig.13b

Fig.13c

Fig.14

## Fig.15

## Fig.16

Fig.17a

Fig.17b

EP 0 400 069 B1